Europäisches Patentamt

European Patent Office

Office européen des brevets

(19)

(11) **EP 0 973 089 B1**

(12) **EUROPEAN PATENT SPECIFICATION**

(45) Date of publication and mention
of the grant of the patent:
**17.07.2002 Bulletin 2002/29**

(51) Int Cl.7: **G06F 7/50**

(21) Application number: **99116001.1**

(22) Date of filing: **20.08.1991**

(54) **Method and apparatus for computing floating point data**

Verfahren und Gerät zur Berechnung von Gleitkommadaten

Procédé et appareil pour la calculation avec des données en virgule flottante

(84) Designated Contracting States:
**DE FR GB NL**

(30) Priority: **24.08.1990 JP 22276390**
**30.10.1990 JP 29383690**

(43) Date of publication of application:
**19.01.2000 Bulletin 2000/03**

(62) Document number(s) of the earlier application(s) in
accordance with Art. 76 EPC:
**91113901.2 / 0 472 148**

(73) Proprietor: **MATSUSHITA ELECTRIC INDUSTRIAL
CO., LTD.**
**Kadoma-shi, Osaka-fu (JP)**

(72) Inventors:
• **Suzuki, Masato**
**Toyonaka-shi, Osaka-fu (JP)**
• **Yasutome, Mikako**
**Moriguchi-shi, Osaka-fu (JP)**
• **Tsuruta, Hideyo**
**Hirakata-shi, Osaka-fu (JP)**

(74) Representative: **Eisenführ, Speiser & Partner
Martinistrasse 24
28195 Bremen (DE)**

(56) References cited:
**US-A- 4 839 846     US-A- 4 926 370**

• **D. KUCK ET AL.: "Analysis of Rounding Methods
in Floating-Point ARithmetic" IEEE
TRANSACTIONS ON ELECTRONIC
COMPUTERS., vol. C-26, no. 7, July 1977
(1977-07), pages 643-650, XP002123658 IEEE
INC. NEW YORK., US**
• **SIT H P ET AL: "AN 80 MFLOPS
FLOATING-POINT ENGINE IN THE INTEL
I860(TM) PROCESSOR" PROCEEDINGS OF THE
INTERNATIONAL CONFERENCE ON
COMPUTER DESIGN: VLSI IN COMPUTERS AND
PROCESSORS. (ICCD),US,WASHINGTON, IEEE
COMP. SOC. PRESS, page 374-379 XP000090505
ISBN: 0-8186-1971-6**
• **GOSLING J B ET AL: "A CHIP-SET FOR A
HIGH-SPEED LOW-COST FLOATING-POINT
UNIT" PROCEEDINGS OF THE SYMPOSIUM ON
COMPUTER ARITHMETIC, 18 - 19 May 1981,
pages 50-55, XP000748087**

**Description**

The present invention generally relates to a method and an apparatus for computing floating point data which are used in the central processing units and so on of the digital computers, and more particularly, are adapted to effect the four fundamental rules of arithmetics computation of the floating point data, further, the four fundamental rules of arithmetics computation of the floating point data, rounding and normalizing computation in accordance with ANSI/IEEE Standard for Binary Floating Point Arithmetic P754.

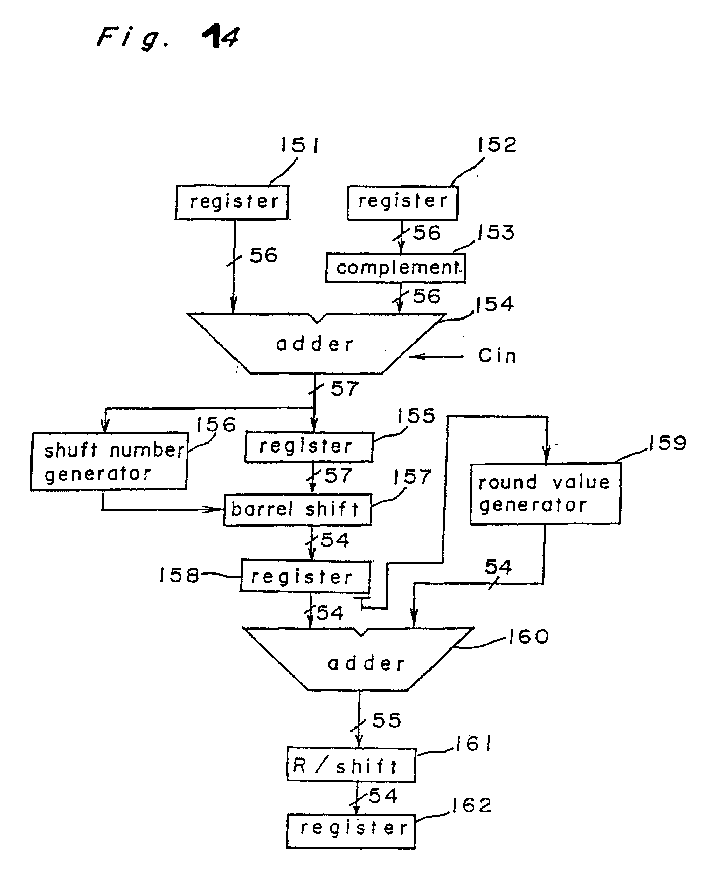

The conventional adding apparatus of the floating point data is shown in the block diagram of Fig. 14. The adding operation shows the addition which is effected with respect to the mantissa data at the subtraction time of different signs or at the addition time of the same signs. The subtraction shows the subtraction which is effected with respect to the mantissa data at the addition of the different signs or the subtraction of the same signs. The addition or subtraction is decided prior to the operation by the type of the signs of the input data and the instructions. Referring now to the same drawing, reference numeral 151 is a register wherein a mantissa which is not smaller in index from two floating-point data is accommodated, reference numeral 152 is a resister wherein a mantissa which is smaller in exponent from two floating-point data is aligned in unit to the exponent not smaller and is accommodated, reference numeral 153 is a complementer which takes 1's complement of the output of the register 152 at the subtraction time, reference numeral 154 is an adder which executes the addition with the carry input (Cin) into the least significant bit being 0 at the addition time with the outputs of the register 151 and the complementer 153 being inputs, executes the subtraction with the carry input (Cin) being 1 at the subtraction time, reference numeral 155 being a register for accommodating the output of the adder 154, reference neutral 156 is a shift number generating circuit for generating shift numbers for the normalization of the output of the adder 154, reference numeral 157 is a barrel shifter which is adapted to shift by bit number the shift number generating circuit 156 shows with respect to the output of the register 155 for the normalization, reference numeral 158 is a register for accommodating the output of the barrel shifter 157, reference numeral 159 is a round value generating circuit which is adapted to decide the existence of the round addition in accordance with the value retained in the register 158, the round mode and the round precision, to generate the round addition value with the least significant bit (L) corresponding to the round precision being 1, the other bits being 0 when rounding up by the rounding, to generate the round addion value with all the bits being 0 when rounding down by the rounding, reference numeral 160 is an adder for adding the output of the register 158 and the output of the round value generating circuit 159, reference numeral 161 is a R1 shifter for shifting by 1 bit the output of the adder 160 in the least significant bit direction (hereinafter referred to as right), reference numeral 162 is a register for accommodating the mantissa of the addition, subtraction result to be obtained by the output of the R1 shifter 161.

The conventional addition, subtraction apparatus of the floating point data constructed as constructed hereinabove will be described hereinafter in its operation.

First, a case where the augend, the minuend and the addend, the subtrahend are the basic single precision format by ANSI/IEEE Standard for Binary Floating-Point Arithmetic P754 (hereinafter referred to as single precision), and the sum or difference is also rounded in single precision.

(1) Before Processing Step Start

A mantissa which is not smaller in exponent out of the augend, the minuend and the addend, the subtrahend is accommodated in the register 151. A mantissa which is smaller in exponent out of the augend, the minuend and the addend, the subtrahend is aligned in unit to the exponent that is not smaller is accommodated in the register 152. The bits which have been taken down at the alignment are accommodated, in the register 152, collectively as a round bit (R) having the weight of $2^{-24}$ in the bit lower by one unit of the least significant bit (L) and a sticky bit (S) which is the logical or of the bits of the bit or lower having the weight of $2^{-25}$.

(2) Step 1

The complememter 153 and the adder 154 add, subtract two mantissas retained in the register 151 and the register 152 so as to accommodate the result in the register 155. At the adding time, the complementer 153 outputs, into the adder 154, the output of the register 152 as it is so as to make zero the Cin of the adder 154. At the subtracting time, the complementer 153 takes 1's complement of the output of the register 152 so as to output it into the adder 154 and make one the Cin.

(3) Step 2

The shift number generating circuit 156 generates the shift number for normalization of the output of the adder 154. The barrel shifter 157 effects the shifting of the output of the register 155 in accordance with the output of the shift number generating circuit 156 so as to effect the normalization shifting operation with respect to the computation result of the step 1. At this time, the barrel shifter 157 generates the shift results down to the least significant bit (L), the round bit (R) having the weight of the $2^{-24}$ lower by one unit of the least significant bit, a sticky bit (S) which is the logical or of the bits of the bit or lower having the weight of $2^{-25}$ and accom-

modates them in the register 158.

(4) Step 3

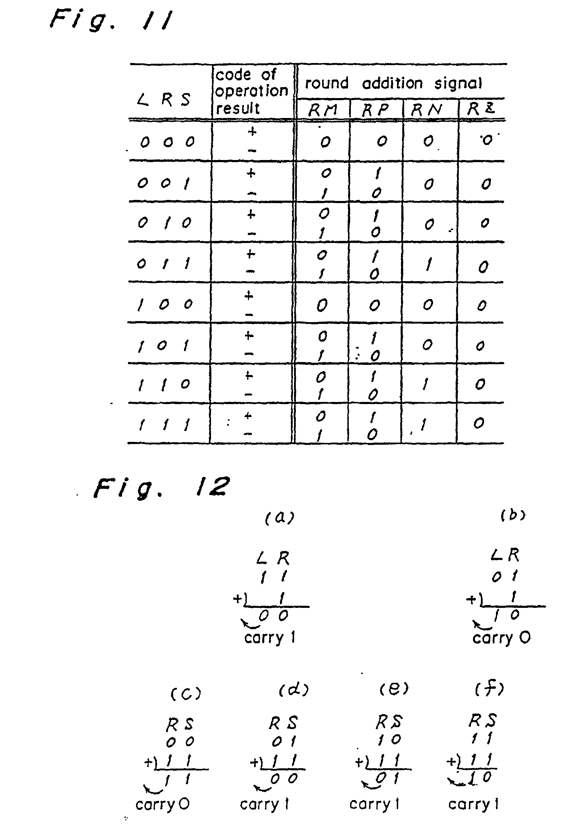

The round value generating circuit 159 generates the round addition value with the least significant bit (L) retained in the register 158, the round bit (R), the sticky bit (S), the round mode and the round precision and the sign of the operation result. The round addition value to be generated has a value with the bit having the weight of $2^{-23}$ being 1, the other bits being 0 when the round addition signal is 1, a round value with the all the bits being made 0 when the round addition signal is 0, in accordance with the input, output relation chart shown in Fig. 11. RM, RP, RN, RZ show in order the directed rounding toward minus, the directed rounding toward plus, the rounding to nearest even in the round mode stipulated in the ANSI/IEEE Standard for Binary Floating-Point Arithmetic P754. The adder 160 adds the output of the register 158 and the output of the round value generating circuit 159. The R1 shifter 161 shifts, by one bit to right, the output of the adder 160 when the overflow has been generated in the adder 160, in the other case, accommodates the output of the adder 160 as it is in the register 162 so as to complete the processing.

A case where the augend, the minuend and the addend, the subtrahend are the basic double precision format by ANSI/IEEE Standard for Binary Floating-Point Arithmetic P754 (hereinafter referred to simply as double precision), and the sum or difference is also rounded in double precision.

(1) Before Processing Step Start

A mantissa which is not smaller in exponent of the augend, the minuend and the addend, the subtrahend is accommodated in the register 151. A mantissa which is smaller in index out of the augend, the minuend and the addend, the subtrahend and is aligned in unit to the exponent that is not smaller, is accommodated in the register 152. The bits which have been taken down at the alignment are accommodated in the register 152 collectively as a round bit (R) having the weight of $2^{-53}$ of the bit lower by one unit of the least significant bit (L) and a sticky bit (S) which is the logical or of the bits of the bit or lower of having the weight of $2^{-54}$.

(2) Step 1

The complementer 153 and the adder 154 add, subtract two mantissas retained in the register 151 and the register 152 so as to accommodate the result in the register 155. At the adding time, the complementer 153 outputs into the adder 154 the output of the register 152 as it is so as to make the Cin of the adder 154 zero. At the subtracting time, the complementer 153 takes 1's complement of the output of the register 152 so as to output it into the adder 154 and make one turning the Cin.

(3) Step 2

The shift number generating circuit 156 generates the shift number for normalization of the output of the adder 154. The barrel shift 157 effects the shifting of the output of the register 155 in accordance with the output of the shift number generating circuit 156 so as to effect the normalization shifting operation with respect to the operation result of the step 1. At this time, the barrel shifter 157 generates the shift results down to the least significant bit (L), the round bit (R) having the weight of the $2^{-53}$ lower by one unit of the least significant bit, a sticky bit (S) which is the logical or of the bits of the bit or lower having the weight of $2^{-54}$ and accommodates them in the register 158.

(4) Step 3

The round value generating circuit 159 generates the round addition value with the least significant bit (L) retained in the register 158, the round bit (R), the sticky bit (S), the round mode, the round precision and the sign of the operation result. The round addition value to be generated has a value with a bit having the weight of $2^{-52}$ being 1, the other bit being 0 when the round addition signal is 1, a round value with all the bits being 0 when the round addition signal is 0, in accordance with the input, output relation chart shown in Fig. 11. The adder 160 adds the output of the register 158 and the output of the round value generating circuit 159. The R1 shifter 161 shifts by one bit to right the output of the adder 160 when the overflow has been generated in the adder, in the other case, accommodates the output of the adder 160 as it is in the register 162 so as to complete the processing.

US 4,926,370 discloses a method and an apparatus for processing postnormalization and rounding in parallel in floating point arithmetic circuits. The fractional result of a floating point arithmetic operation is simultaneously passed to a normalized circuit and a round circuit, and the first two bit positions of the fractional result are examined. If the 2-bit format is 1.X the round circuit is activated; if the 2-bit format is 0.1X the fractional result is shifted one position and the round circuit is activated; if the 2-bit format is in neither of the above formats the normalized the circuit is activated.

SUMMARY OF THE INVENTION

Accordingly, an essential object of the present invention is to provide a method and an apparatus for the addition and subtraction of floating point data which is capable of mantissa addition, subtraction and the round addition value addition simultaneously within the same adder, and is less in the number of the processing steps necessary to get the mantissa portion of the sum and difference in the floating point data rounded with the specified round mode and the round precision, and is less in hardware as compared with the addition and subtraction apparatus of the conventional floating point data.

In order to accomplish these objects, according to the present invention there is provided a data processing method for subjecting two floating point data to an arithmatic computation which includes real mantissa subtraction which is the subtraction of the two floating point data of a same sign or the addition of the two floating point data of different signs, the two floating point data respectively including first and second mantissas and first and second exponents, wherein a difference between the first and second exponents is 0 or 1, said method comprising when said difference of exponents is 0 or 1, a first step of effecting a subtraction of the first and second mantissas aligned to a same one of the first and second exponents to obtain a computation result, wherein a second step of either bit shifting the computation result to normalize the computation result when the computation result is a denormalized number, or adding a round addition value, which is determined according to a predetermined rounding precision and a predetermined rounding mode, to the computation result when the computation result is a normalized number to complete the processing.

The objects of the present invention are also accomplished an addition, subtraction apparatus of the floating point data comprising a mantissa subtraction executing means for effecting the subtraction of the first, second mantissas aligned to the same exponent, a normalization means for shifting the operation result so as to effect the normalization when the computation result by the mantissa subtraction executing means are the denormalized number, a round addition means for adding the round addition values determined uniformly by the round precision and the round mode with respect to the operation result when the operation result by the mantissa subtraction executing means are normalized numbers, when the operation of the floating point data is in the real mantissa subtraction which is at the subtraction of the same signs or at the addition of the different signs and the exponent difference of the floating point data is 0 or 1 wherein said addition, subtraction apparatus containing a means for effecting either the normalization by said normalization means or the rounding by said rounding addition means with respect to the operation result, when said exponent difference is 0 or 1.

## BRIEF DESCRIPTION OF THE DRAWING

These and other objects and features of the present invention will become apparent from the following description taken in conjunction with the preferred embodiment thereof with reference to the accompanying drawings, in , which;

Fig. 1 is a block diagram of an addition subtraction apparatus of floating point data wherein a first embodiment of the invention may be implemented;

Fig. 2 is a block diagram of an addition subtraction apparatus of floating point data in a second embodiment wherein the present invention may be implemented;

Fig. 3 is a control relation chart of a round correction repeating control circuit 109 at rounding to latest even mode of the addition, subtraction apparatus of the floating point data;

Fig. 4, Fig. 5, Fig. 6 are control relation charts of the round correction repeating control circuit 109 in the directed rounding toward plus mode or the directed rounding toward minus mode of the addition, subtraction apparatus of the floating point data in the first and second embodiments;

Fig. 7 is a control relation chart of the carry control apparatus 115 of the addition, subtraction of the floating point data in the second embodiment;

Fig. 8 is a processing flow chart of the conventional addition, subtraction apparatus of the floating point data and the addition, subtraction apparatus of the floating point data in the first and second embodiments of the present invention;

Fig. 9 is an input, output relation chart of the round value generating circuit 106 of the addition, subtracting apparatus of the floating point data in the first embodiment of the present invention;

Fig. 10 is the sign and operation relation chart of operation of the adder and the method of deciding the sign of the computing result of the addition, subtraction apparatus of the floating point data;

Fig. 11 is an illustrating chart showing the existence, absence of the round addition of the conventional addition, subtraction apparatus of the floating point data and the addition, subtraction apparatus of the floating point data.

Fig. 12 is a principle chart of the carry generation at the round addition time at the rounding to nearest mode, the positive directed rounding toward plus mode and directed rounding toward minus mode of the addition, subtraction apparatus of the floating point data;

Fig. 13 is an embodiment view of the addition, subtraction which becomes the principle of the addition, subtraction apparatus of the floating point data;

Fig. 14 is a block diagram of the addition, subtraction apparatus of the conventional floating point data;

DETAILED DESCRIPTION OF THE INVENTION

Before the description of the present invention proceeds, it is to be noted that like parts are designated by like reference numerals throughout the accompanying drawings.

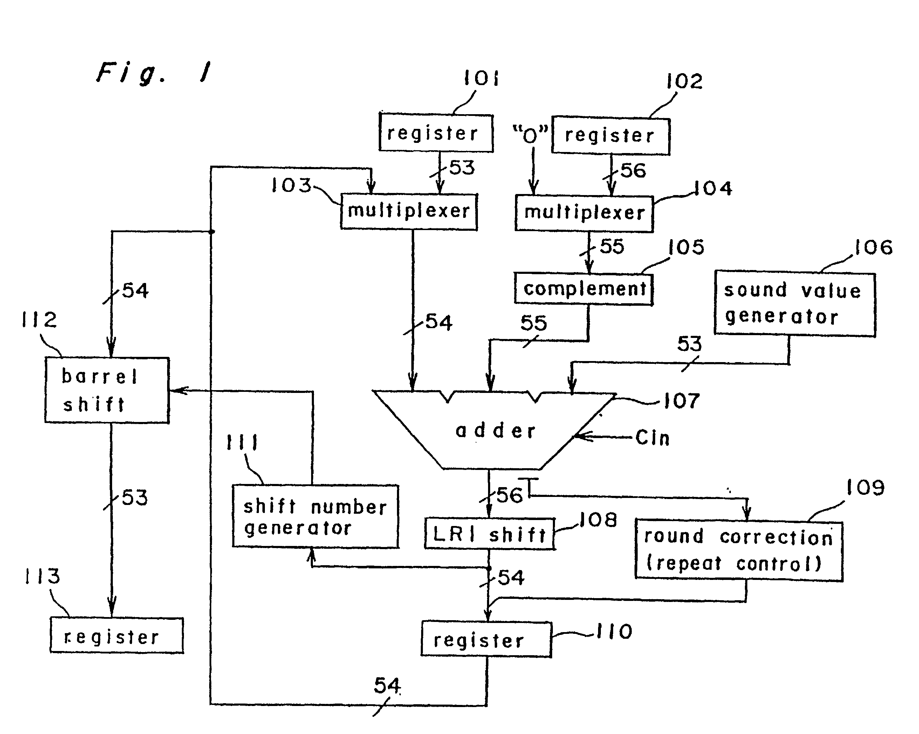

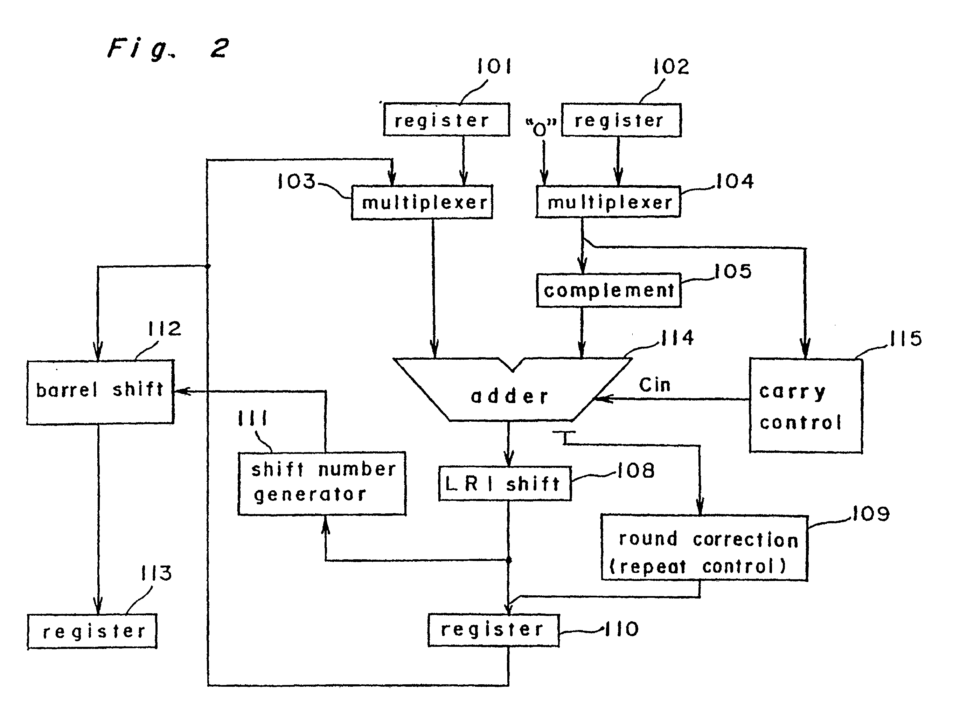

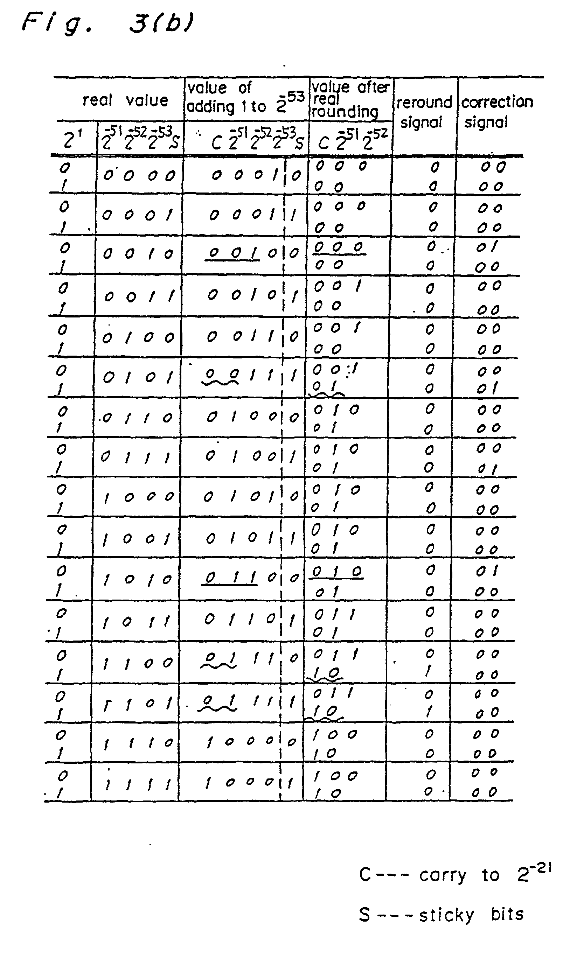

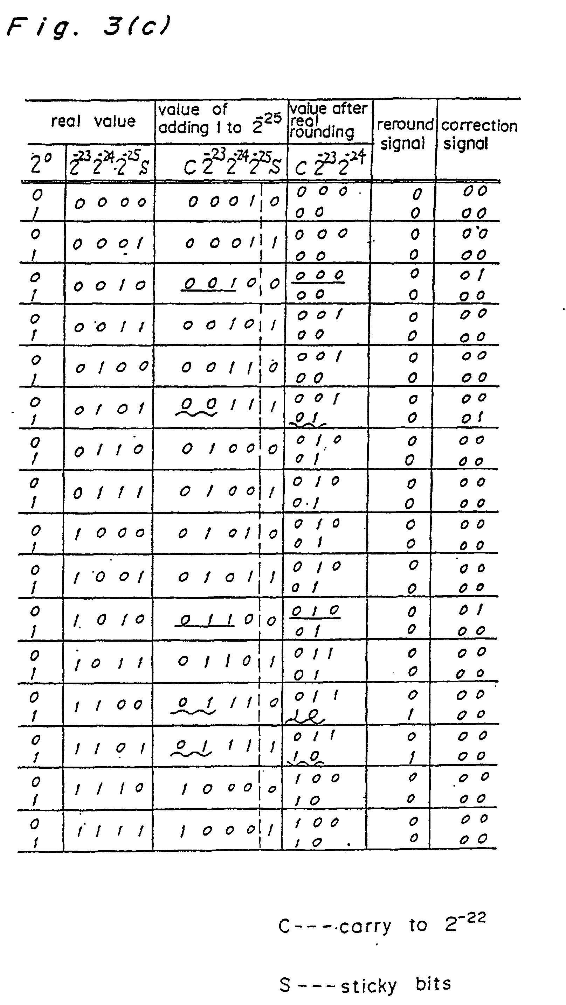

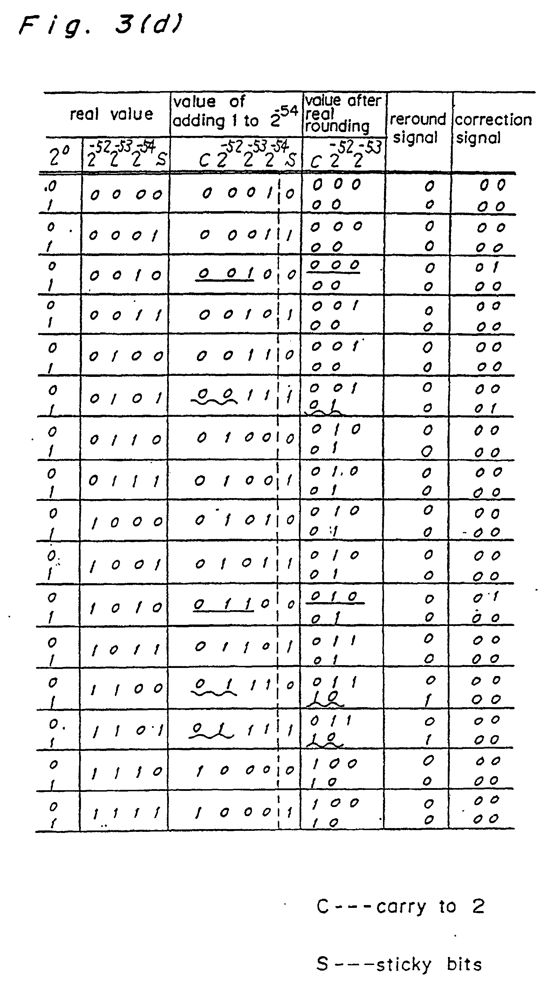

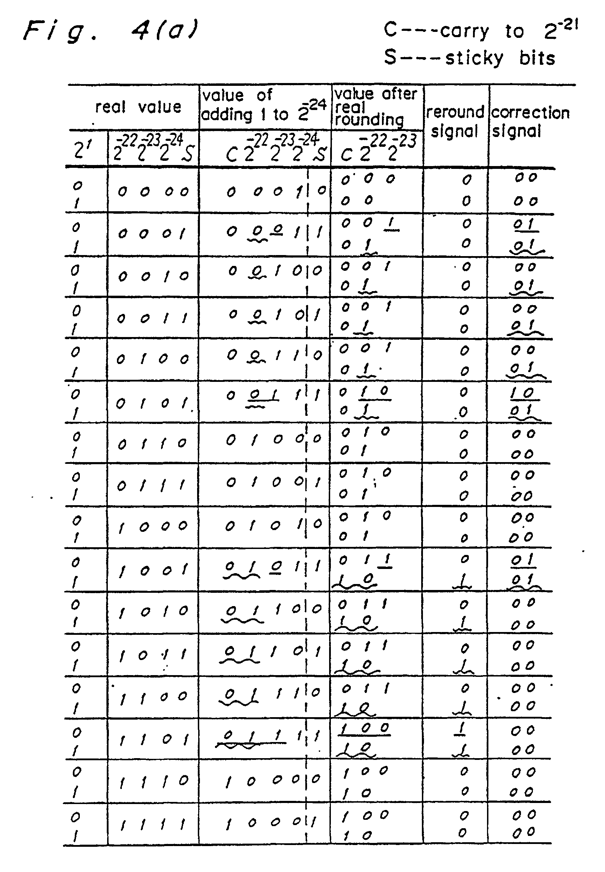

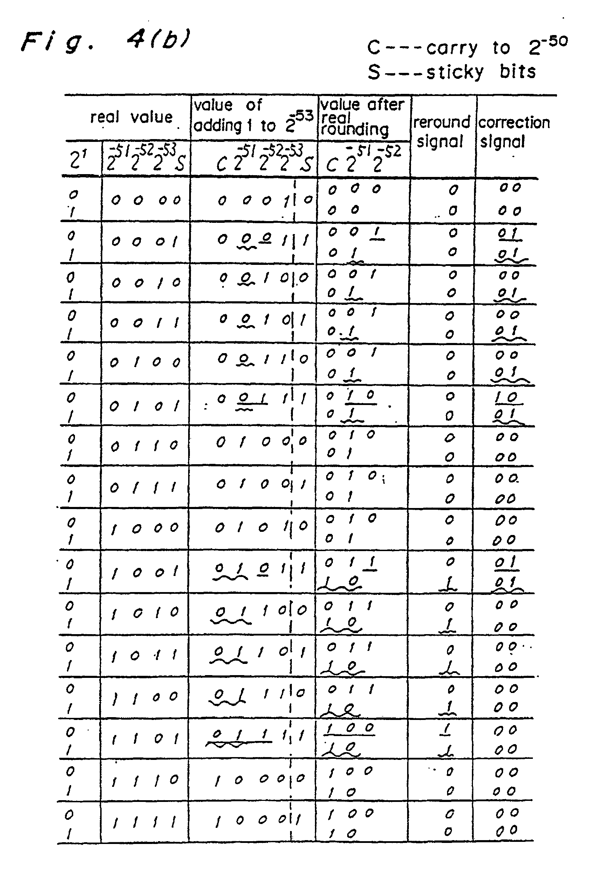

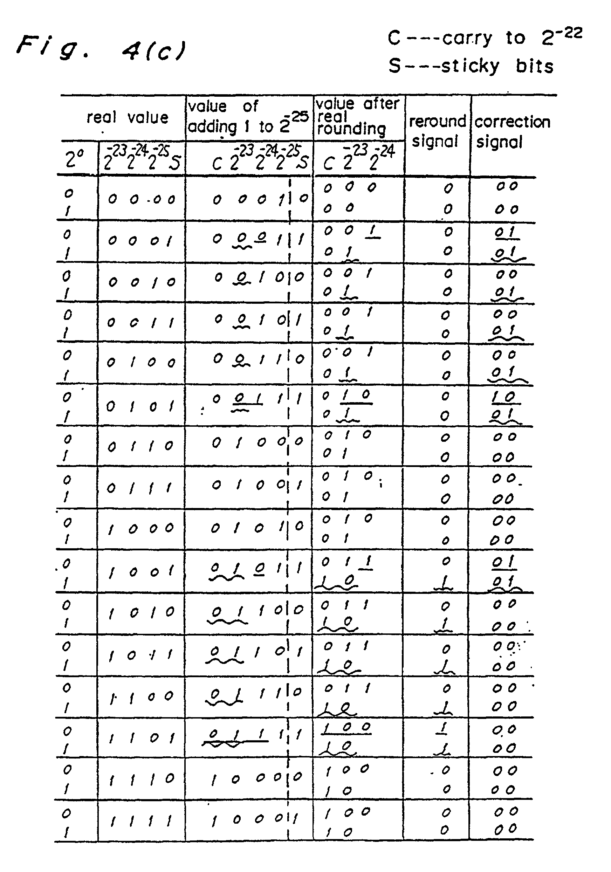

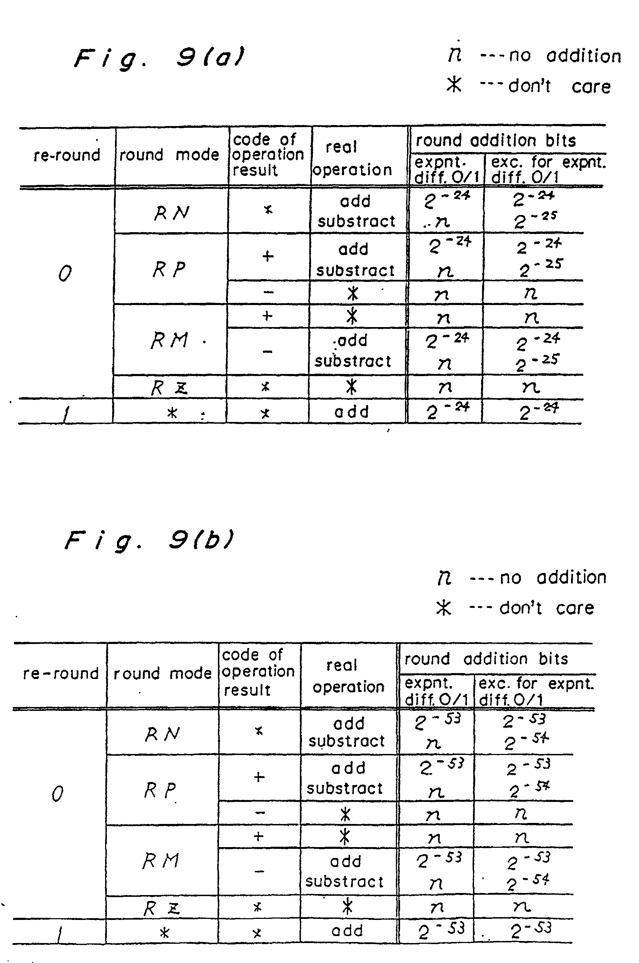

Fig. 1 shows a block diagram of the addition, subtraction apparatus of the floating point data wherein the present invention may be anbodied. In Fig. 1, reference numeral 101 is a resister for accommodating a mantissa which is not smaller in exponent out of two floating point data, reference numeral 102 is a register for accommodating the mantissa, smaller in the exponent, aligned to exponent not smaller from two floating point data, reference numeral 103 is a multiplexor for selecting the register 110 to be described later when the round correction repeating control circuit 109 to be described later has instructed the insertion of the new processing step and the register 101 at the normal computing time except for above, reference numeral 104 is a multiplexor for selecting the constant 0 when the round correction repeating control circuit 109 to be described later has instructed the insertion of the new processing step and the register 102 at the normal computing time except for above,, reference numeral 105 is a complementer for taking 1's complement of the output of the multiplexor 104 at the subtracting time, reference numeral 106 is a round value generating circuit for deciding the position of the round addition in accordance with the exponent difference of the two floating point data, the operation type and the round mode so as to generate the data with the round added bit being 1 and the other bits being 0, reference numeral 107 is an adder which is adapted to simultaneously execute the temporary round and operation by the addition of the output of the multiplexor 103, the output of the complementer 105 and the output of the round value generating circuit 106 with the carry input (Cin) being 0 at the addition time, the carry input (Cin) being 1 at the subtraction operation time, reference numeral 108 is a LR1 shifter which shifts by 1 bit the output of the adder 107 in the least significant bit direction (hereinafter referred to as right) when the bit having the weight of $2^1$ of the output of the adder 107 is 1, shifts by 1 bit the output of the adder 107 in the most significant bit direction (hereinafter referred to as left) when the bit having the weight of $2^1$ and the bit having the weight of $2^0$ are both 0, and at the time except for them, outputs the output, as it is, of the adder 107, reference numeral 109 is a round correction repeating control circuit which judges whether or not the round effected by the adder 107 is correct and instructs the accommodation of the corrected value in the register 110 to be described later and the completion of the processing, when the correct round result may be obtained only by the correction of the least significant bit or the least significant bit and one upper bit, and instructs the insertion of the processing when the readdition of the round value is required to be effected so as to obtain the correct round results, reference numeral 110 is a register for accommodating the output of the LR1 shifter 108, reference numeral 111 is a shift number generating circuit for generating the shift number for normalizing the value retained in the register 110, reference numeral 112 is a barrel shifter which is adapted to effect an shifting operation by bit number the shift number generating circuit 111 shows with respect to the output of the register 110 for the normalization, reference numeral 113 is a register for accommodating the output of the barrel shifter 112. Fig. 3 is a control relation chart of the round correction repetitive control circuit 109 shown in Fig. 1 when the round mode is the rounding to nearest even mode. When the addition of the two floating point data of the same sign or the subtraction of two floating point data of the different sign (hereinafter referred to as mantissa addition)are effected, with the round precision being the single precision, the requirement of the bit correction of the output of the adder 107 and the requirement of the readdition of the round addition value are determined from the bits having the weights of $2^1$, $2^{-22}$, $2^{-23}$, $2^{-24}$ of outputs of the adder 107 and the sticky bit S which is the logical or of the bits of the bits having the weight of $2^{-25}$, or lower as shown in Fig. 3 (a), the requirement of the bit correction of the output of the adder 107 and the requirement of the readdition of the round addition value are determined from bits having the weights of $2^1$, $2^{-51}$, $2^{-52}$, $2^{-53}$ of the output of the adder 107 and the sticky bit S which is the ligical or of the bits, having the weight of $2^{-54}$, or lower as shown in Fig. 3 (b) when the mantissa addition is carried out and the round precision are the double precision, the requirement of the bit correction of the output of the adder 107 and the requirement of the readdition of the round addition value are determined from bits having the weights of $2^0$, $2^{-23}$, $2^{-24}$, $2^{-25}$ of the output of the adder 107, and the sticky bit S which is the logical or of bits, having the weight of $2^{-26}$, or lower as shown in Fig. 3, (c) when the subtraction of two floating point data of the same sign or the addition of two floating point data of the different sign (hereinafter referred to as mantissa subtraction) are carried out, with the rounding precision being the single precision, the requirement of the bit correction of the output of the adder 107 and the requirement of the readdition of the round addition value are determined from bits having the weights of $2^0$, $2^{-52}$, $2^{-53}$, $2^{-54}$ of the adder 107 and the sticky bit S which is the logical or of the bits, having the weight of $2^{-55}$, or lower as shown in Fig. 3 (d) when the mantissa subtraction is executed, with the round precision being the double precision. Fig. 4 is a control relation chart of a round correction repetition control circuit 109 shown in Fig. 1 when the round mode is the directed rounding toward plus mode, with the sign of the computation result being positive. When the two the mantissa addition is executed, with the round precision being the single precision, the requirement of the bit correction of the output of the adder 107 and the requirement of the readdition of the round addition value are determined from the bits having the weights of $2^1$, $2^{-22}$, $2^{-23}$, $2^{-24}$ of output of the adder 107 and the sticky bit S which is the logical or of the bit of the bits, having the weight $2^{-25}$, or lower as shown in Fig. 4 (a), the requirement of the bit correction of the output of the adder 107 and the requirement of the readdition of the round addition value are determined from bits having the weights of $2^1$, $2^{-51}$, $2^{-52}$, $2^{-53}$ of the output of the adder 107 and the sticky bit S which is the logical or of the bits, having the weight of $2^{-54}$, or lower as shown in Fig. 4 (b) when the mantissa addition is carried out and the round precision is the double precision, the requirement of the bit correction of the output of the adder 107 and the requirement of the readdition of the round addition value are determined from bits having the weights of $2^0$, $2^{-23}$, $2^{-24}$, $2^{-25}$ of the output of the adder 107, and the sticky bit S which is the logical or of the bits, having the weight of $2^{-26}$, or lower as shown in Fig. 4, (c) when the mantissa subtraction) is executed, with the round precision being the single precision, the requirement of the bit correction of the output of the adder 107 and the requirement of the readdition of the round addition value are determined from bits having the weights of $2^0$, $2^{-52}$, $2^{-53}$, $2^{-54}$ of the output of the adder 107 and the sticky bit S which is the logical or of the bits, having the weight of $2^{-55}$, or lower as shown in Fig. 4 (d) when the mantissa subtraction is executed, with the round precision being the double precision. Fig. 9 is an input, output relation chart of a round value generating circuit 106 shown in Fig. 1, and determines the round addition value in accordance with the round mode, the sign of the computation result, the type of the operation, whether or not the step is round readdition. The round value generating circuit 106 generates the round addition value with the value of the weight bit the round addition bit shows being 1, with the others being 0 in accordance with Fig. 9 (a) when the round precision is the single precision, and Fig. 9 (b) when the round precision is the double precision.

The addition, subtraction apparatus of the floating point data in the present embodiment constructed as described hereinabove will be described in its principle. Here a case where the round precision is the single precision is shown by way of example, with the double precision being based on the same thinking way.

Assume that the mantissa portions of the augend, minuend and the addend, subtrahend are f1, f2 and the exponent portions of the augend, minuend and the addend, subtrahend are e1, e2 (wherein e1 ≤ e2), and the mantissa portion A of the sum at the mantissa addition time is expressed by

$$A = f1 + 2^{-(e1-e2)} f2$$

When the range of the value of the normalized mantissa

$$2^0 \leq f1 \leq 2^1 - 2^{-23} \qquad 2^0 \leq f2 \leq 2^1 - 2^{-23}$$

is considered,

$$2^0 \leq A \leq 2^1 - 2^{-23} + 2^1 - 2^{-23} = 2^2 - 2^{-22}$$

$$2^0 \leq A < 2^1 + 2^0 + 2^{-1} + \ldots + 2^{-22}$$

$$1.\,0_{(2)} < A < 11.\,1111 \ldots 11_{(2)}$$

The shift number necessary for the normalization after the mantissa addition becomes 1 bit to right even at the greatest. $_{(2)}$ shows the binary digit expression in numerical value. Also, the mantissa portion A of the difference at the mantissa subtraction time is shown by

$$A = f1 - 2^{-(e1-e2)} f2$$

Here by the value of e1 - e2,

    (1) time of e1 - e2 = 0

$$0 \leq A \leq 2^1 - 2^{-23} = 2^0 + 2^{-1} + \ldots + 2^{-22} + 2^{-23}$$

$$0 \leq A \leq 1.1111 \ldots 11_{(2)}$$

The shift number necessary for the normalization after the mantissa subtraction becomes 0 bit at the minimum and 23 bits to left at the maximum.
(2) time of e1 - e2 = 1

$$2^0 - 2^{-1} \times (2^1 - 2^{-23}) \leq A \leq 2^1 - 2^{-23} - 2^{-1} \times 2^0.$$

$$0.000 \ldots 001_{(2)} \leq A \leq 1.01111 \ldots 111_{(2)}$$

The shift number necessary for the normalization after the mantissa subtraction becomes 0 bit at the minimum and 24 bits to left at maximum.
(3) time of e1 - e2 = 2

$$2^0 - 2^{-2} \times (2^1 - 2^{-23}) \leq A \leq 2^1 - 2^{-23} - 2^{-2} \times 2^0$$

$$0.100 \ldots 001_{(2)} \leq A \leq 1.0111 \ldots 111_{(2)}$$

The shift number necessary for normalization after the mantissa subtraction becomes 1 bit to left at maximum.

(4) time of e1 - e2 = 3

$$2^0\text{-}2^{-3} \times (2^1\text{-}2^{-23}) \leq A \leq 2^1\text{-}2^{-23}\text{-}2^{-3} \times 2^0$$

$$0.110....001_{(2)} \leq A \leq 1.11011....111_{(2)}$$

The shift number necessary for normalization after the mantissa subtraction becomes 1 bit to left at maximum. Likewise, as at the time of e1 - e2≥4, the shift number necessary for normalization after the mantissa subtraction becomes 1 bit to left at maximum, at the e1 - e2≥2 the shift number necessary for normalization after the mantissa subtraction becomes 1 bit to left even at maximum.

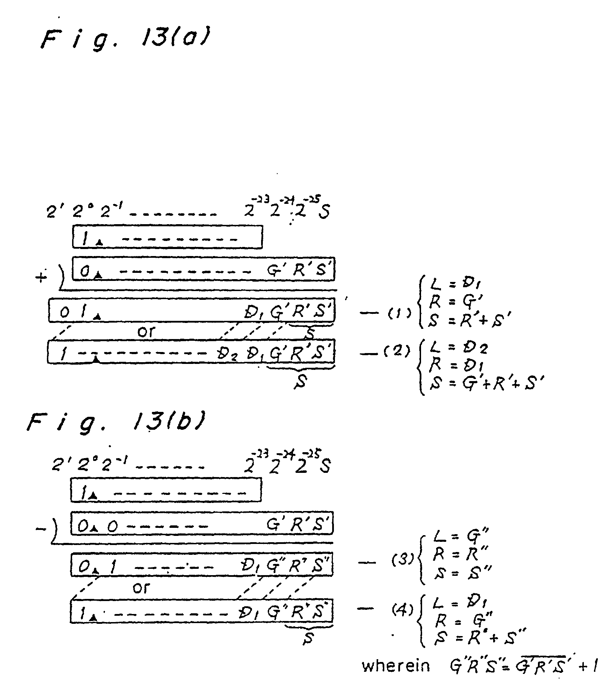

By the above described fact, at the time of mantissa addition or at the time of mantissa subtraction except for exponent differences 0, 1, the shift of 2 bits or more after the mantissa computation is not necessary. At the former time, the result in the bit having the weight of $2^{-22}$ or the bit having the weight of $2^{-23}$ before the normalization becomes the least significant bit (L). At the latter time, the result in the bit having the weight of $2^{-23}$ or the bit having the weight of $2^{-24}$ becomes the least significant bit (L). Accordingly, simultaneously with the addition, subtraction at the time of the mantissa addition or at the time of the mantissa subtraction except for the exponent difference 0, 1, the rounding is effected at the positions of these bits, and thereafter 1 bit normalized shift operation has only to be effected to right or to left. Only at the time of the mantissa subtraction of 0 or 1 in the exponent difference, the shift of 2 bit or more after the computation are necessary. At the time of the exponent difference 0, the alignment shift operation is not effected before the computation, so that the effective value is not provided lower than the least significant bit and the rounding is not necessary. At the time of the exponent difference 1, the alignment shift number before the computation is 1 bit, so that the effective value is provided only at 1 bit lower (round bit R) of the least significant bit. If the bit having the weight $2^0$ is 1, the shift for normalization is unnecessary, but the rounding only is required. If the bit having the weight of $2^0$ is 0, the round bit is moved into the least significant bit or the upper than it by the shift for the normalization, so that the rounding is not necessary after the normalization. Therefore, when the exponent difference is at 0 or 1, the mantissa subtraction, the shift for normalization or rounding has only to be effected at most after the computation. The position of the least significant bit (L) at the mantissa addition time is shown in Fig. 13 (a), the position of the least significant bit (L) at the mantissa subtraction time except for the exponent difference 0, 1 is shown in Fig. 13 (b).

A principle for realizing the rounding to nearest to even is shown hereinafter. In order to make the value be rounded to the nearest value, the existence of the addition to the least significant bit is determined by whether the bit to be added, namely, the bit (round bit R) smaller by 1 of the least significant bit (L) is 1 or 0. When the round bit is 0, the data before being rounded and the data after being rounded are the same. When the round bit is 1, 1 is to be added to the least significant bit. The round addition is automatically realized by the addition of 1 to the round bit, because the carry from the round bit works as the value added to the least significant bit. As the bits smaller than the round bit are not judged in this method, the rounding operation may be effected to the larger one by the rounding addition even when the round bit is 1 and the bits smaller than it are 0, namely the value is tie. But the ANSI/IEEE Standard for Binary Floating-Point Arithmetic P754 stipulates, the tie value to be rounded to the even number. As shown in the column of RN of Fig. 11, even if the round bit is 1 when the sticky bit showing the portion smaller than the round bit is 0, which is a tie value, the value is rounded so that least significant bit may be normally even in number. More concretely, when the least significant bit is 1, the rounding addition is effected. When the least significant bit is 0, the round addition is not effected.

Here, the noteworthy fact is the carry propagation to the least significant bit when the rounding addition has been effected to the round bit. When the round bit is 1, the round bit becomes 0 by the rounding addition and the carry generated by the rounding addition is added to the least significant bit. When the least significant bit is 1, the carry is propagated to the upper bit as shown in Fig. 12 (a). When the least significant bit is 0, the carry is not propagated, thus resulting in 1 in the least significant bit as shown in Fig. 12 (b). When the round bit and the sticky bit are both 0 after the addition has been effected unconditionally upon the round bit the tie value which is 1 in the round bit and 0 in the sticky bit may be exactly rounded to the even number by the correction of the least significant bit to 0. Namely, if the position of the round bit is determined before the operation, the rounding and the computation may be executed at the same time.

1 is temporarily added to the bit having the weight $2^{-24}$ at the mantissa addition time and 1 is temporarily added to the bit having the weight of the $2^{-25}$ at the subtraction time except for 0, 1 in the exponent difference and the operation is effected. Thereafter, the real round bit is determined by the bits having the weight of $2^1$ and $2^0$ of the operation result so as to realize the round by the correction of the round results temporarily effected. By the bits having the weights of $2^{-22}$, $2^{-23}$, $2^{-24}$ of the result temporarily round added, and 1 bit which is the logical or of bits smaller than them at the mantissa addition time, the bits having the weights of $2^{-23}$, $2^{-24}$, $2^{-25}$ of the result temporarily round added, and 1 bit which is the logical or of bits smaller than them at the mantissa subtraction, the following are judged,

> a the case the correct result is obtained
> b the case the correct result is obtained by the correction of the bit having the weight of $2^{-22}$ or $2^{-23}$
> c the case the correct result is not obtained only in the correction of the bit having the weight of $2^{-22}$ or $2^{-23}$

In the case of the b, the bit is corrected. In the case of the c, the same rounding is added again, the correct computing result is obtained.

The adding, subtraction apparatus of the floating point data in the present embodiment composed as described hereinabove will be described hereinafter in its operation. The description is divided in the sequence of the rounding to nearest even mode, the directed rounding toward plus mode and the directed rounding toward minus mode, the directed rounding toward zero mode. Further, the round precision is divided in the single precision and the double precision in each of the modes.

1. Rounding to Nearest Even Mode

1-1 when the augend, minuend and the addend, subtrahend are the single precision format, and the sum or the difference is rounded into single precision

(1) Before Processing Step Start

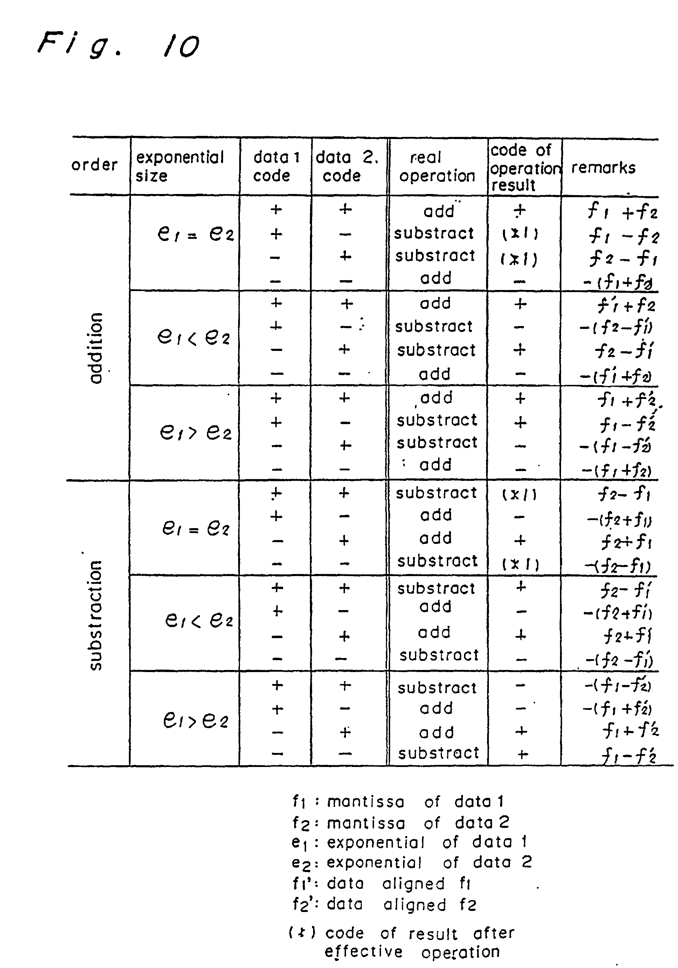

In accordance with the exponents and the signs of two floating point data and whether the instruction is the addition or the subtraction, the type of the operation of the mantissa addition or the mantissa subtraction and the sign of the computation result are determined as shown in the sign and operation relation chart of Fig. 10. The mantissa which is not smaller in exponent from the augend, minuend and the addend, subtrahend is accommodated in the register 101. The mantissa which is smaller in exponent from the augend, minuend and the addend, subtrahend is aligned to the exponent which is not small, is accommodated in the register 102. The bits which are spilt at the alignment are accommodated in the register 102 together as the round bit (R) having the weight of the $2^{-24}$ at a bit which is lower by 1 bit of the least significant bit (L) and the sticky bit (S) which is the logical or of the bits, having the weight of $2^{-25}$, or lower.

(2) Step 1

· Mantissa addition time

The output of the register 101 is selected by the multiplexor 103, and the output of the register 102 is selected by the multiplexor 104. In the round value generating circuit 106, the data with the bit having the weight of $2^{-24}$ being 1, the other bits being made 0 are generated. The complementer 105 outputs the multiplexor 104 output as it is, and the adder 107 executes (register 1) + (register 2) + (round addition value) with the Cin being made 0. When the bit having the weight of $2^1$ of the output of the adder 107 is 1, the LR1 shifter 108 effects 1 bit shift to the right. In accordance with the instruction of the round correction repetitive control circuit 109, by the bits having the weight of $2^{-25}$ of the output of the adder 107 and the S bit, the output of the LR1 shifter 108 is accommodated in the register 110 with the bit having the weight of the $2^{-23}$ inverted when the correction signal shown in Fig. 3 (a) is 01, and without correction when the correction signal is 00. When the rerounding signal of the round correction repetitive control circuit 109 is 1, the insertion of the new step for executing the readdition of the round value is instructed. But when the rerounding signal is 0, this step completes the computing operation with the rounding operation being effected in accordance with the round precision.

· Mantissa subtraction time except for the exponent difference 0, 1

The output of the register 101 is selected by the multiplexor 103, and the output of the register 102 is selected by the multiplexor 104. In the round value generating circuit 106, the data with the bit having the weight of $2^{-25}$ being 1, the other bits being made 0 are generated. The complementer 105 inverts the output of the multiplexor 104 to input them into the adder 107, and the adder 107 executes (register 1) - (register 2) + (round addition value) with the Cin being made 1. When the bit having the weight of $2^0$ of the output of the adder 107 is 0, the LR1 shifter 108 effects 1 bit shift to the left. 1 bit (S) which is the logical or of bits, having the weight of $2^{-26}$ of the output of the adder 107, or lower, is generated. In accordance with the instruction of the round correction repetitive control circuit 109 by the bits having the weights of the $2^0$, $2^{-23}$, $2^{-24}$, $2^{-25}$ of the output of the adder 107 and the S bit, the output of the LR1 shifter 108 is accommodated in the register 110 with the bit having the weight of the $2^{-23}$ inverted when the correction signal shown in Fig. 3(c) is 01 without correction when the correction signal is 00. When the correction signal is 00, the output of the LR1 shifter 108 is accommodated as it is into the register 110. When the rerounding signal of the round correction repetitive control circuit 109 is 1, the insertion of the new step for executing the readdition of the round value is instructed. But when the rerounding signal is 0, this step completes the computing operation with the rounding operation being effected in accordance with the round precision.

· Mantissa subtraction time with the exponent difference 0, 1

The output of the register 101 is selected by the multiplexor 103, and the output of the register 102 is selected by the multiplexor 104. In the round value generating circuit 106, the data with all the bits being made 0 are generated. The complementer 105 inverts the output of the multiplexor 104 so as to input them to the adder 107, and the adder 107 executes (register 1) - (register 2) with the Cin being made 1. When the bit having the weight of $2^0$ of the output of the adder 107 is 0, the LR1 shifter 108, effects 1 bit shift to the left. In the round correction competitive control circuit 109, the insertion of the step insertion for rounding is instructed when the three bits having the weights of the $2^0$, $2^{-23}$, $2^{-24}$ of the output of the adder 107 are 1 respectively. In the shift number generating circuit 111, the shift number necessary for normalizing the output of the LR1 shifter 108 is generated. The insertion of the step for normalization is instructed when the shift number is not 0. When the insertion of the step for rounding and the insertion of the step for normalization are not caused respectively, the computation is completed by this step.

(3) Insertion Step (only when the insertion of the step is instructed)

· Mantissa addition time

The output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-24}$ generated by the round value generating circuit 106 of the step 1, being 1 , the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

· Mantissa subtraction time except for exponent difference 0, 1

The output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-25}$ generated by the round value generating circuit 106 of the step 1, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

· Mantissa subtraction time with the exponent difference 0, 1

When the insertion of the step for the normalization has been instructed by the shift number generating circuit 111, the barrel shifter 112 inputs the register 110, shifts to left by the shift number generated by the shift number generating circuit 111 so as to accommodate in the register 113 for completing the processing.

When the insertion of the step for rounding has been instructed by the round correction repetitive control circuit 109, the output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-23}$ generated by the round value generating circuit 106, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

1-2 When the augend, minuend and the addend, subtrahend are the double precision format, and the sum or the difference is rounded into double precision

(1) Before Processing Step Start

In accordance with the exponents and other signs of the two floating point data and whether the instruction is addition or subtraction, the type of the operation of the mantissa addition or the mantissa subtraction and the sign of the computation result are determined as shown in the sign and operation relation chart of Fig. 10. The mantissa which is not smaller in exponent from the augend, minuend and the addend, subtrahend is accommodated in the register 101. The mantissa which is smaller in exponent from the augend, minuend and the addend, subtrahend is aligned to the exponent which is not small, is accommodated in the register 102. The bits which are spilt at the alignment are accommodated in the register 102 together as the round bit (R) having the weight of the $2^{-53}$ at a bit which is lower by 1 bit of the least significant bit (L) and the sticky bit (S) which is the logical or of the bits, having the weight of $2^{-54}$, or lower.

(2) Step 1

· Mantissa addition time

The output of the register 101 is selected by the multiplexor 103, and the output of the register 102 is selected by the multiplexor 104. In the round value generating circuit 106, the data with the bit having the weight of $2^{-53}$ being 1, the other bits being made 0 are generated. The complementer 105 the outputs the multiplexor 104 output as it is, and the adder 107 executes (register 1) + (register 2) + (round addition value) with the Cin being made 0. When the bit having the weight of $2^1$ of the output of the adder 107 is 1, the LR1 shifter 108 effects 1 bit shift to the right. 1 bit (S) which is the logical or of bits, having the weight of $2^{-54}$ of the output of the adder 107 is generated. In accordance with the instruction of the round correction repetitive control circuit 109 by the bits having the weights of $2^1$, $2^{-51}$, $2^{-52}$, $2^{-53}$ of the outputs of the adder 107 and the S bit, the output of the LR1 shifter 108 is accommodated in the register 100 with the bit having the weight of the $2^{-52}$ inverted when the correction signal shown in Fig. 3(b) is 01, without correction when the correction signal is 00. When the rerounding signal of the round correction repetitive control circuit 109 is 1, the insertion of the new step for executing the readdition of the round value is instructed. But when the rerounding signal is 0, this step completes the computing operation with the rounding operation being effected in accordance with the round precision..

· Mantissa subtraction time except for the exponent difference 0, 1

The output of the register 101 is selected by the multiplexor 103, and the output of the register 102 is selected by the multiplexor 104. In the round value generating circuit 106, the data with the bit having the weight of $2^{-54}$ being 1, the other bits being made 0 are generated. The complementer 105 inverts the output of the multiplexor 104 to input them into adder 107, and executes the (register 1) - (register 2) + (round addition value) with the Cin being made 1. When the bit having the weight of $2^0$ of the output of the adder 107 is 0, the LR1 shifter 108 effects 1 bit shift to the left. 1 bit (S) which is the logical or of bits, having the weight of $2^{-55}$ of the output of the adder 107, or lower, is generated. In accordance with the instruction of the round correction repetitive control circuit 109, by the bits having the weights of $2^0$, $2^{-52}$, $2^{-53}$, $2^{-54}$ of the outputs of the adder 107 and the S bit, the output of the LR1 shifter 108 is accommodated in the register 110 with the bit having the weight of the $2^{-52}$ inverted when the correction signal shown in Fig. 3 (d) is 01 without correction when the correction signal is 00. When the rerounding signal of the round correction repetitive control circuit 109 is 1, the insertion of the new step for executing the readdition of the round value is instructed. But when the reroundig signal is 0, this step completes the computing operation with the rounding operation being effected in accordance with the round precision.

· Mantissa subtraction time with the exponent difference 0, 1

The output of the register 101 is selected by the multiplexor 103, and the output of the register 102 is selected by the multiplexor 104. In the round value generating circuit 106, the data with all the bits being made 0 are generated. The complementer 105 inverts the output of the multiplexor 104 so as to input them to the adder 107 and executes the (register 1) - (register 2) with the Cin being made 1. When the bit having the weight of $2^0$ of the output of the adder 107 is 0, the LR1 shifter 108 effects 1 bit shift to the left. In the round correction competitive control circuit 109, the insertion of the step for the rounding is instructed when the three bits having the weights of the $2^0$, $2^{-52}$, $2^{-53}$ of the output of the adder 107 are 1 respectively. In the shift number generating circuit 111, the shift number necessary for normalizing the output of the LR1 shifter 108 is generated. The insertion of the step for normalization is instructed when the shift number is not 0. When the insertion of the step for the rounding and the insertion of the step for normalization are not caused respectively, the computation is completed by this step.

(3) Insertion Step (only when the insertion of the step is instructed)

· Mantissa addition time

The output of the register 110 is selected by the multiplexor 103, the constant 0 is selected by the multiplexor 104. The output of the multiplexor 103, the output of the complementer 105 with the output of the multiplexor 104 being outputted as it is, the data with the bit, having the weight of $2^{-53}$ generated by the round value generating circuit 106 of the step 1, being 1, the other bits being 0 are added by the adder 107 is 1. When the bit having the weight of $2^1$ of the output of the adder 107, the LR1 shifter 108 effects 1 bit shift to right. When the bit having the weight of $2^1$ is 0, the value as it is is accommodated in the register 110 so as to complete the processing.

· Mantissa subtraction time except for exponente difference 0, 1

The output of the register 110 is selected by the multiplexor 103, the constant 0 is selected by the multiplexor 104. The output of the multiplexor 103, the output of the complementer 105 with the output of the multiplexor 104 being outputted as it is, the data with the bit, having the weight of $2^{-54}$ generated by the round value generating circuit 106 of the step 1 being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

· Mantissa subtraction time with the exponent difference 0, 1

When the insertion of the step for the normalization has been instructed by the shift number generating circuit 111, the barrel shifter 112 inputs the register 110, shifts to left by the shift number generated by the shift number generating circuit 111 so as to accommodate in the register 113 for completing the processing.

When the insertion of the step for rounding has been instructed by the round correction repetitive control circuit 109, the output of the register 110 is selected by the multiplexor 103, the constant 0 is selected by the multiplexor 104. The output of the multiplexor 103, the output of the complementer 105 with the output of the multiplexor 104 being outputted as it is, the data with the bit, having the weight of $2^{-52}$ generated by the round value generating circuit 106, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

2 Directed Rounding Toward Plus Mode And Directed Rounding Toward Minus Mode

2-1 when the augend, minuend and the addend, subtrahend are the single precision format, and the sum and the difference is rounded into single precision

(1) Before Processing Step Start

In accordance with the exponents and the signs of two floating point data and whether the instruction is addition or subtraction, the type of the operation of the mantissa addition or the mantissa subtraction and the signs of the computation result are determined as shown in the sign and operation relation chart of Fig. 10. When the sign of the computation result is negative in the directed rounding toward plus mode mode or the sign of the computation result is positive in the directed rounding toward minus mode, the operation is effected in accordance with the operation of the directed rounding toward zero mode to be described later. When the sign of the computation result is positive in the directed rounding toward plus mode when the sign of the computation result is negative in the directed rounding toward minus mode, the operation is effected as follows. The mantissa which is not smaller in exponent from the augend, minuend and the addend, subtrahend is accommodated in the register 101. The mantissa which is smaller in exponent from the augend, minuend and the addend, subtrahend, is aligned to the exponent that is not smaller, is accommodated in the register 102. The bits which are spilt at the alignment are together accommodated in the register 102 as the round bit (R) having the weight of $2^{-24}$ at a bit which is lower by 1 bit of the least significant bit (L), and as the sticky bit (S) which is the logical or of the bits, having the weight of $2^{-25}$, or lower.

(2) Step 1

· Mantissa addition time

The output of the register 101 is selected by the multiplexor 103, and the output of the register 102 is selected by the multiplexor 104. In the round value generating circuit 106, the data with the bit having the weight of $2^{-24}$ being 1, the others bit being made 0 are generated. The complementer 105 outputs the multiplexor 104 output as it is, and the adder 107 executes (register 1) + (register 2) + (round addition value) with the Cin being made 0. When the bit having the weight of $2^1$ of the output of the adder 107 is 1, the LR1 shifter 108 effects 1 bit shift to the right. 1 bit (S) which is the logical or of bits, having the weight of $2^{-25}$ of the output of the adder 107, or lower, is generated. In accordance with the instruction of correction repetitive control circuit 109 by the bits having the weights of the $2^1$, $2^{-22}$, $2^{-23}$, $2^{-24}$ of the output of the adder 107 and the S bit, the output of the LR1 shifter 108 is accommodated in the register 110 with the the the bit having the weight of the $2^{-23}$ inverted when the correction signal shown in Fig. 4(a) is 01 with the bits having the weight $2^{-22}$, $2^{-23}$ of the output of the LR1 shifter 108 is inverted when correction signal is 10, and without correction when the correction signal is 00. When the rerounding signal of the round correction repetitive control circuit 109 is 1, the insertion of the new step for executing the readdition of the round value is instructed. But when the rerounding signal is 0, this step completes the computing operation with the rounding operation being effected in accordance with the round precision.

· Mantissa subtraction time except for the exponent difference 0, 1

The output of the register 101 is selected by the multiplexor 103, and the output of the register 102 is selected by the multiplexor 104. In the round value generating circuit 106, the data with the bit having the weight of $2^{-25}$ being 1, the other bits being made 0 are generated. The complementer 105 inverts the output of the multiplexor 104 so as to input them to the adder 107 and the adder 107 executes (register 1) - (register 2) + (round addition value) with the Cin being made 1. When the bit having the weight of $2^0$ of the output of the adder 107 is 0, the LR1 shifter 108 effects 1 bit shift to the left. 1 bit (S) which is the logical or of bits, having the weight of $2^{-26}$ of the output of the adder 107, or lower, is generated. In accordance with instruction of the round correction repetitive control circuit 109, by the bits having the weights of $2^0$, $2^{-23}$, $2^{-24}$, $2^{-25}$ of the output of the adder 107 and the S bit, the output of the LR1 shifter 108 is accommodated in the register 110 with the bit having the weight of the $2^{-23}$ inverted when the correction signal shown in Fig. 4 (c) is 01, the bits having the weights of $2^{-22}$ and $2^{-23}$ of the output of the LR1 shifter 108 inverted when the correction signal is 10 and without correction when the correction signal is 00. When the rerounding signal of the round correction repetitive control circuit 109 is 1, the insertion of the new step for executing the readdition of the round value is instructed. But when the rerounding signal is 0, this step completes the computing operation with the rounding operation being effected in accordance with the round precision.

· Mantissa subtraction time with the exponent difference 0, 1

The output of the register 101 is selected by the multiplexor 103, and the output of the register 102 is selected by the multiplexor 104. In the round value generating circuit 106, the data with all the bits being made 0 are generated. The complementer 105 inverts the output of the multiplexor 104 so as to input them to the adder 107, and the adder 107 executes (register 1) - (register 2) with the Cin being made 1. When the bit having the weight of $2^0$ of the output of the adder 107 is 0, the LR1 shifter 108 effects 1 bit shift to the left. In the round correction competitive control circuit 109, the insertion of the step insertion for rounding is instructed when the two bits having the weights of the $2^0$, $2^{-24}$ of the output of the adder 107 are 1 respectively. In the shift number generating circuit 111, the shift number necessary for normalizing the output of the LR1 shifter 108 is generated. The insertion of the step for normalization is instructed when the shift number is not 0. When the insertion of the step for rounding and the insertion of the step for normalization are not caused respectively, the computation is completed by this step.

(3) Insertion Step (only when the insertion of the step is instructed)

· Mantissa addition time

The output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-24}$ generated by the round value generating circuit 106 of the step 1, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

· Mantissa subtraction time except for exponent difference 0, 1

The output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-25}$ generated by the round value generating circuit 106 of the step 1, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

· Mantissa subtraction time with the exponent difference 0, 1

When the insertion ofthe step for the normalization has been instructed by the shift number generating circuit 111, the barrel shifter 112 inputs the register 110, shifts to left by the shift number generated by the shift number generating circuit 111 so as to accommodate in the register 113 for completing the processing.
When the insertion of the step for rounding has been instructed by the round correction repetitive control circuit 109, the output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-23}$ generated by the round value generating circuit 106, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

2-2 when the augend, minuend and the addend, subtrahend are the double precision format, and the sum or the difference is rounded into double precision

(1) Before Processing Step Start

In accordance with the exponents and the signs of two floating point data and whether the instruction is addition or subtraction, the type of the operation of the mantissa addition or the mantissa subtraction, and the sign of the computation result are determined as shown in the sign and operation relation chart of Fig. 10. When the sign of the computation result is negative in the directed rounding toward plus mode or the sign of the computation result is positive in the directed rounding toward minus mode the operation is effected in accordance with the operation of the directed rounding toward zero mode to be described later. When the sign of the computation result is positive in the directed rounding toward plus mode when the sign of the computation results is negative in the directed rounding toward minus mode the operation is effected as follows. The mantissa which is not smaller in exponent from the augend, minuend and the addend, subtrahend is accommodated in the register 101. The mantissa which is smaller in exponent from the augend, minuend and the addend, subtrahend, and is aligned to the exponent that is not smaller, is accommodated in the register 102. The bits which are spilit at the alignment setting time are together accommodated in the register 102 as the round bit (R) having the weight of $2^{-53}$ at a bit which is lower by 1 bit of the least significant bit (L), and as the sticky bit (S) which is the logical or of the bits, having the weight of $2^{-54}$, or lower.

(2) Step 1

· Mantissa addition time

The output of the register 101 is selected by the multiplexor 103, and the output of the register 102 is selected by the multiplexor 104. In the round value generating circuit 106, the data with the bit having the weight of $2^{-53}$ being 1, the other bits being made 0 are generated. The complementer 105 outputs the multiplexor 104 output as it is, and the adder 107 executes (register 1) + (register 2) + (round addition value) with the Cin being made 0. When the bit having the weight of $2^1$ of the output of the adder 107 is 1, the LR1 shifter 108effects 1 bit shift to the right 1. 1 bit (S) which is the logical or of bits having the weight of $2^{-54}$ of the output of the adder 107, or lower is generated. In accordance with the instruction of the round correction repetitive control circuit 109 by the bits having the weights of the $2^1$, $2^{-51}$, $2^{-52}$, $2^{-53}$ of the output of the adder 107 and the S bit, the output of the LR1 shifter 108 is accomodated in the register 110 with the bit having the weight of the $2^{-52}$ inverted when the correction signal shown in Fig. 4 (b) is 01, with the bits having the weight $2^{-51}$, $2^{-52}$ of the output of the LR1 shifter 108 invrted when the correction signal is 01 and without correction when the correction signal is 00. When the rerounding signal of the round correction repetitive control circuit 109 is 1, the insertion of the new step for executing the readdition of the round value is instructed. But when the reround signal is 0, this step completes the computing operation with the rounding operation being effected in accordance with the round precision.

· Mantissa subtraction time except for the difference 0, 1

The output of the register 101 is selected by the multiplexor 103, and the output of the register 102 is selected by the multiplexor 104. In the round value generating circuit 106, the data with the bit having the

weight of $2^{-54}$ being 1, the other bits being made 0 are generated. The complementer 105 inverts the output of the multiplexor 104 so as to input them to the adder 107 and the adder 107 executes (register 1) - (register 2) + (round addition value) with the Cin being made 1. When the bit having the weight of $2^0$ of the output of the adder 107 is 0, the LR1 shifter 108 effects 1 bit shift to the left. 1 bit (S) which is the logical or of bits having the weight of $2^{-55}$ of the output of the adder 107, or lower, is generated. In accordance with instruction of the round correction repetitive control circuit 109 by the bits having the weights of the $2^0$, $2^{-52}$, $2^{-53}$, $2^{-54}$ of the output of the adder 107 and the S bit, the output of the LR1 shifter 108 is accommodated in the register 110 with the bit having the weight of the $2^{-52}$ inverted when the correction signal shown in Fig. 4 (d) is 01, with the bits having the weights of $2^{-51}$ and $2^{-52}$ of the output of the LR1 shifter 108 inverted when the correction signal is 01, and without correction when the the correction signal is 00. When the rerounding signal of the round correction repetitive control circuit 109 is 1, the insertion of the new step for executing the readdition of the round value is instructed. But when the reround signal is 0, this step completes the computing operation with the rounding operation being effected in accordance with the round precision.

· Mantissa subtraction time with the exponent difference 0, 1

The output of the register 101 is selected by the multiplexor 103, and the output of the register 102 is selected by the multiplexor 104. In the round value generating circuit 106, the data with all the bits being made 0 are generated. The complementer 105 inverts the output of the multiplexor 104 so as to input them to the adder 107, and the adder 107 executes (register 1) - (register 2) with the Cin being made 1. When the bit having the weight of $2^0$ of the output of the adder 107 is 0, the LR1 shifter 108 effects 1 bit shift to the left. In the round correction competitive control circuit 109, the insertion of the step for the rounding is instructed when the two bits having the weights of the $2^0$, $2^{-53}$ of the output of the adder 107 are 1 respectively. In the shift number generating circuit 111, the shift number necessary for normalizing the output of the LR1 shifter 108 is generated. The insertion of the step for normalization is instructed when the shift number is not 0. When the insertion of the step for the rounding and the insertion of the step for normalization are not caused respectively, the computation is completed by this step.

(3) Insertion Step (only when the insertion of the step is instructed)

· Mantissa addition time

The output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-53}$ generated by the round value generating circuit 106 of the step 1, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

· Mantissa subtraction time except for exponent difference 0, 1

The output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-54}$ generated by the round value generating circuit 106 of the step 1, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

· Mantissa subtraction time with the exponent difference 0, 1

When the insertion of the step for the normalization has been instructed by the shift number generating circuit 111, the barrel shifter 112 inputs the register 110, shifts to left by the shift number generated by the shift number generating circuit 111 so as to accommodate in the register 113 for completing the processing.
When the insertion of the step for rounding has been instructed by the round correction repetitive control circuit 109, the output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-52}$ generated by the round value generating circuit 106, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

3 Zero Direction Round Mode

(The following processing is common when the augend, minuend and the addend, subtrahend are the single precision format, and the sum or the difference is rounded into single precision and when the augend, minuend and the addend, subtrahend are the double precision format, and the sum or the difference is rounded into double precision)

(1) Before Processing Step Start

In accordance with the exponents and the signs of two floating point data and the whether instruction is addition or subtraction, the type of the operation of the mantissa addition or the mantissa subtraction and the sign of the computation result are determined as shown in the sign and operation relation chart of Fig. 10. The mantissa which is not smaller in exponent from the augend, minuend and the addend, subtrahend is accommodated in the register 101. The mantissa which is smaller in exponent from the augend, minuend and the addend, subtrahend, is aligned to the exponent which is not smaller, is accommodated in the register 102.

(2) Step 1

· Mantissa addition time

The output of the register 101 is selected by the multiplexor 103, and the output of the register 102 is selected by the multiplexor 104. In the round value generating circuit 106, the data with all the bits being made 0 are generated. The complementer 105 outputs the multiplexor 104 output as it is so as to input them to the adder 107, and the adder 107 executes (register 1) + (register 2) with the Cin being made 0. When the bit having the weight of $2^1$ of the output of the adder 107 is 1, the LR1 shifter 108, effects 1 bit shift to the right so as to complete the computing operation.

· Mantissa subtraction time except for exponent differences 0, 1

The output of the register 101 is selected by the multiplexor 103, and the output of the register 102 is selected by the multiplexor 104. In the round value generating circuit 106, all the bits being made 0 are generated. The complementer 105 inverts the output of the multiplexor 104 to input them to the adder 107, and the adder 107 executes (register 1) - (register 2) with the Cin being made 1. When the bit having the weight of $2^0$ of the output of the adder 107 is 0, the LR1 shifter 108 effects 1 bit shift to the left so as to complete the computing operation.

· Mantissa subtraction time with the exponent difference 0, 1

The output of the register 101 is selected by the multiplexor 103, and the output of the register 102 is selected by the multiplexor 104. In the round value generating circuit 106, the data with all the bits being made 0 are generated. The complementer 105 inverts the output of the multiplexor 104 so as to input them to the adder 107, and the adder 107 executes (register 1) - (register 2) with the Cin being made 1. When the bit having the weight of $2^0$ of the output of the adder 107 is 0, the LR1 shifter 108 effects 1 bit shift to the left. In the shift number generating circuit 111, the shift number necessary for normalizing the output of the LR1 shifter 108 is generated. The insertion of the step for normalization is instructed when the shift number is not 0. When the insertion of the step for normalization is not caused, the computation is completed by this step.

(3) Insertion Step (only when the insertion of the step is instructed)

· Only at mantissa subtraction time with the exponent difference 0, 1

The barrel shifter 112 inputs the register 110 to shift to the left by the shift number generated by the shift number generating circuit 111 for accommodating it so as to complete the processing.

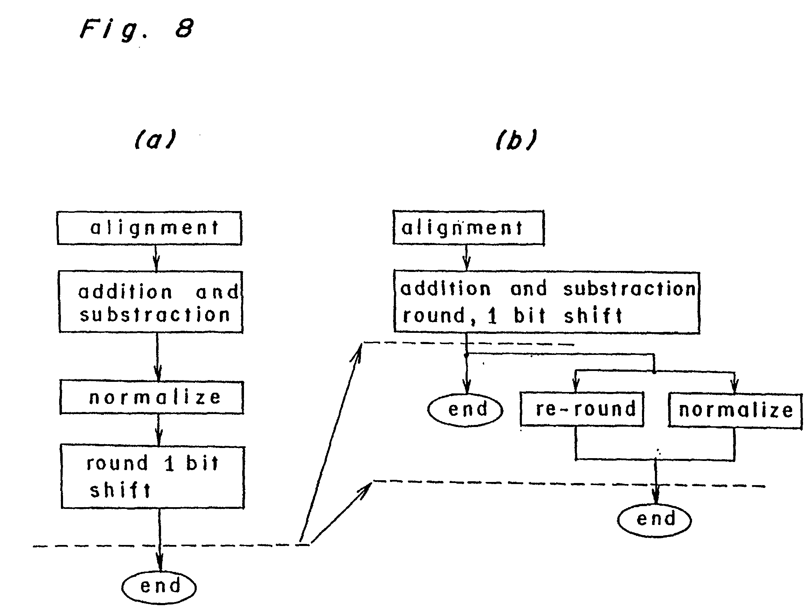

According to the present embodiment, at the mantissa addition time or the mantissa subtraction time except for the exponent differences 0, 1, the sum of the three of two floating point data mantissas and the round addition value or the sum of the two former difference and the latter are effected at the same time by the adder 107. The processing may be completed in most case by the normalizing of the result by the LR1 shifter 108. Even when the correction of the output of the LR1 shift 108 by the instruction of the round correction competitive control circuit 109 is necessary, the completing operation may be effected without increase in the processing step number. The completing operation may be effected by the insertion, by 1 step, of the processing only when the addition of the round addition value by the adder 107 is required again. The probability necessary in the insertion of 1 step is extremely small, and it is two thirty-seconds at the roundinging to nearest even mode three thirty-seconds at the time of the directed rounding toward plus mode or the directed rounding toward minus mode, and 0 at the time of the directed rounding toward zero mode (when the bit pattern of the mantissa is assumed to be uniformly distributed). As the result, in most cases, (thirty thirty-seconds at the time of the rounding to nearest even mode twenty nine thirty-seconds at the time of the directed rounding toward plus mode or the directed rounding toward minus mode, 1 at the time of the directed rounding zero mode), the processing step number necessary for the addition, subtraction becomes as small as 2. Even at the time of the mantissa subtraction time of the exponent differences 0, 1, by the subtraction of the mantissas of two floating point data and the addition of the round addition values are effected at the same time by the adder 107. And by the normalization of the result by the LR1 shifter 108. The processing may be completed in most of the cases, only when the shift of 2 bits or more for normalization by the barrel shifter 112 or the processing can be completed by the insertion of 1 step, the addition of the round addition value is necessary by the adder 107, the number of the processing steps necessary in most of the cases becomes as small as 2. These processing flows are shown in Fig. 8 (b). Even in the either case, as the addition, subtraction of the mantissas and the addition of the round addition value are executed by the single adder 107, the necessary hardwares are less as compared with the conventional addition, subtraction apparatus of the floating point data.

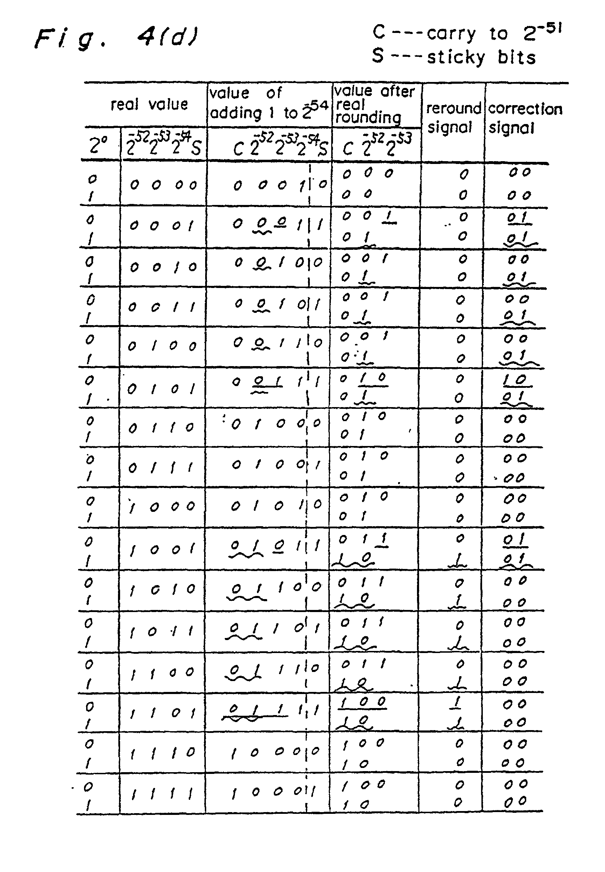

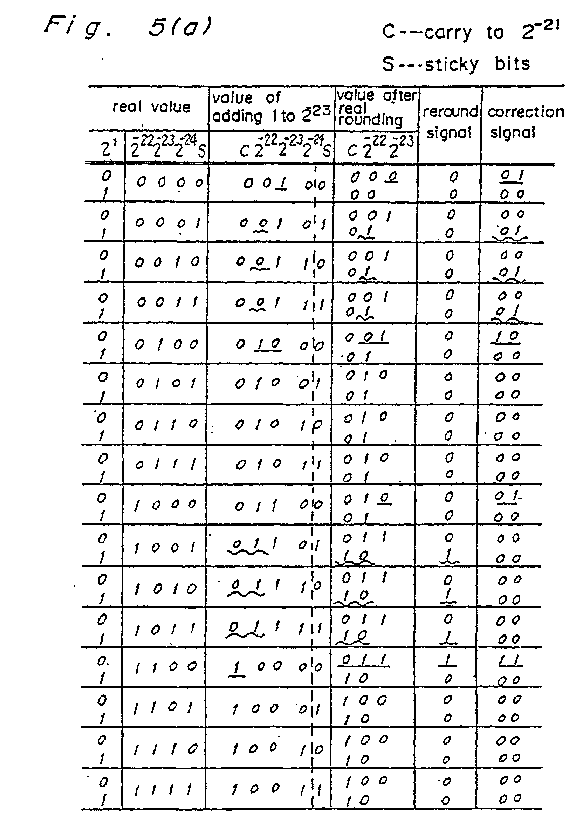

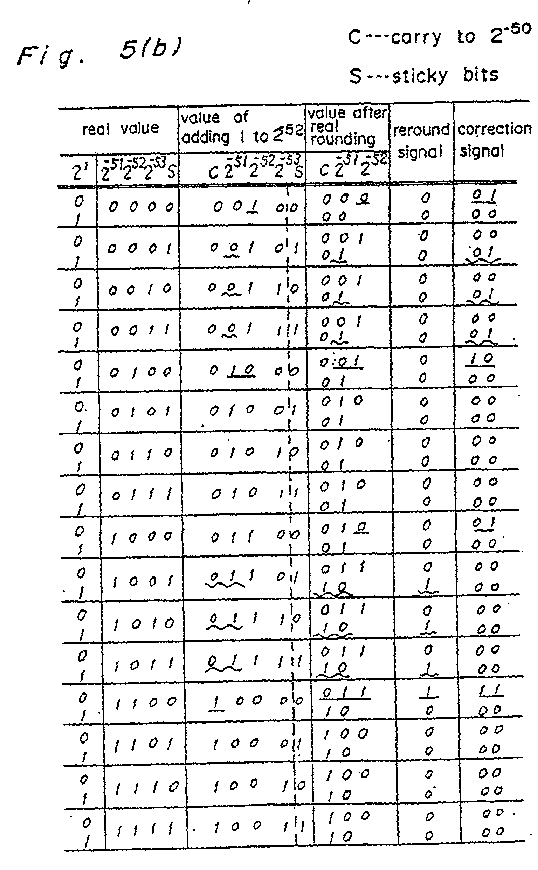

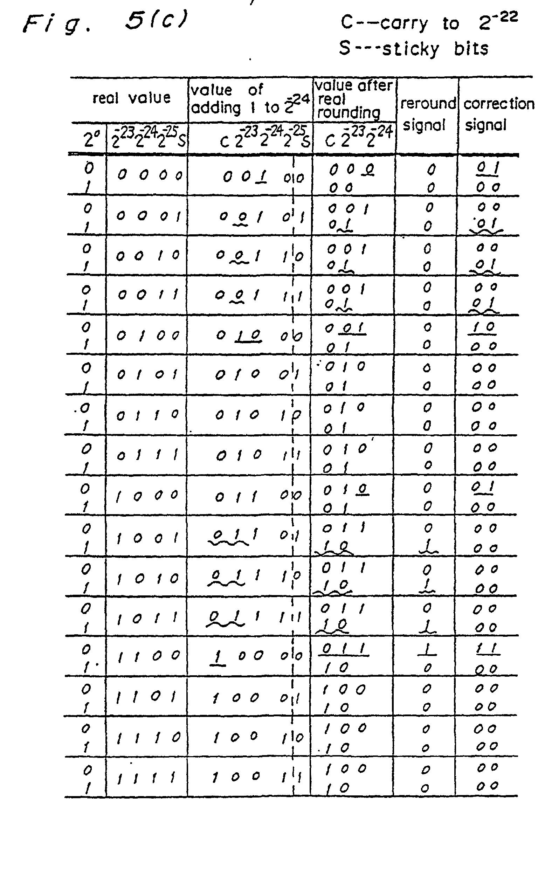

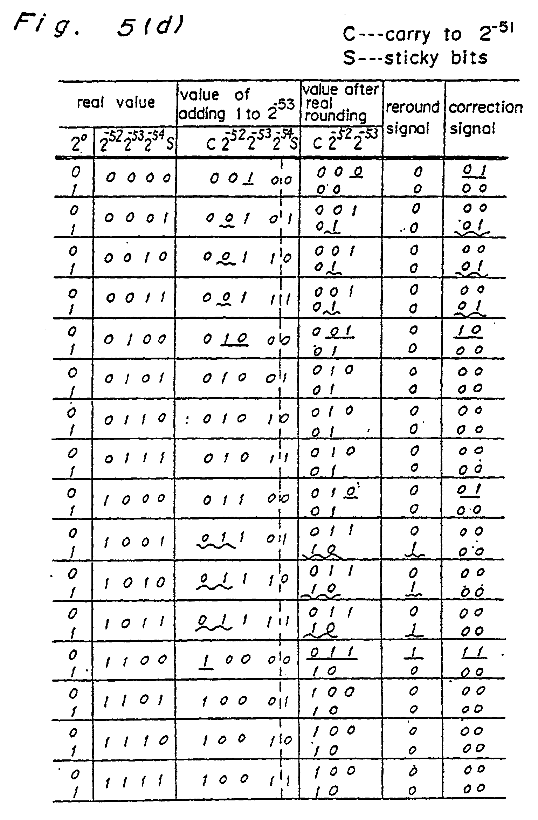

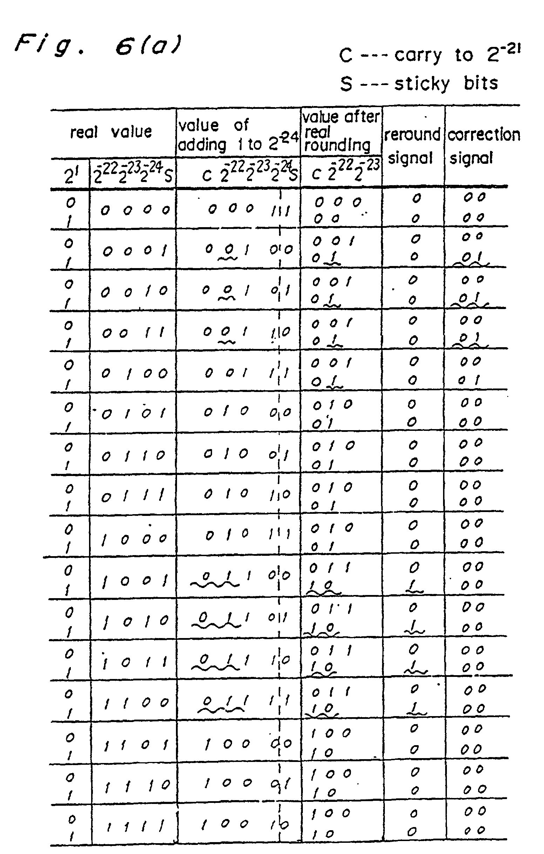

Although in the present embodiment at the directed rounding toward plus mode or at the directed rounding toward minus mode, in accordance with the respective cases of the mantissa addition with single precision rounding, the mantissa subtraction of 0 or 1 in exponent difference with single precision rounding, the mantissa addition with double precision rounding, the mantissa subtraction of 0 or 1 in exponent difference with double precision rounding, the data are generated with the bits having the weights of $2^{-24}$, $2^{-25}$, $2^{-53}$, $2^{-54}$ in the round value generating circuit 106 being 1, the other bits being 0, the output of the LR1 shifter 108 is accommodated in the register 110 with the bits having the wights of $2^{-23}$, $2^{-23}$, $2^{-52}$, $2^{-52}$ inverted when the correcting signal is 01, and with the bits having the weights of $2^{-22}$ and $2^{-23}$, $2^{-22}$ and $2^{-23}$, $2^{-51}$ and $2^{-52}$, $2^{-51}$ and $2^{-52}$ inverted when the correction signal is 10 in accordance with the control relation charts of the Fig. 4 (a), (b), (c), (d) by the round correction repetitive control circuit 109, and the insertion of the new step for again adding the round addition value generated by the round value generating circuit 106 is instructed, when the rerounding signal of the round correction repetitive control circuit 109 is 1, the data can be generated with the bits ahving the weights of $2^{-23}$, $2^{-24}$, $2^{-52}$, $2^{-53}$ in the round value generating circuit 106 being 1, the other bits being 0, the output of the LR1 shifter 108 is accommodated in the register 110 with the bits having the weight of $2^{-23}$, $2^{-23}$, $2^{-52}$, $2^{-52}$ inverted when the correction signal is 01, and with the bits having the weight of $2^{-22}$ and $2^{-23}$, $2^{-22}$ and $2^{-23}$, $2^{-51}$ and $2^{-52}$, $2^{-51}$ and $2^{-52}$ inverted when the correction signal is 10 in accordance with the control relation charts of Fig. 5 (a), (c), (b), (d) by the round correction repetitive control circuit 109, the insertion of the new step for adding again the round addition value generated by the round value generating circuit 106 can be instructed, when the reround signal of the round correction repetitive control circuit 109 is 1 and the correction signal is 00, and the insertion of the new step for subtracting from the value for retaining in the register 110 the round addition value generated by the round value generating circuit 106 can be instructed when the reround signal is 1 and the correction signal is 11. In this manner, the probability necessary in the insertion of 1 step is reduced as low as two thirty-seconds, thus improving the computing speed.

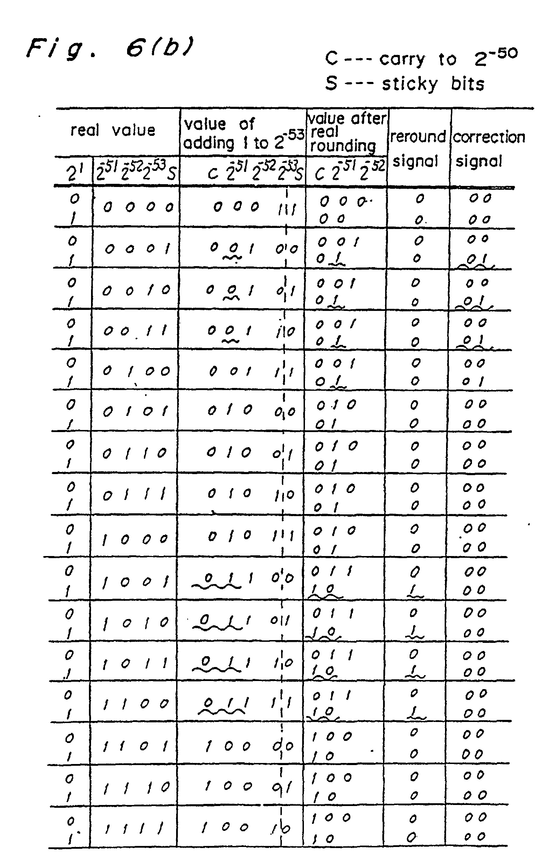

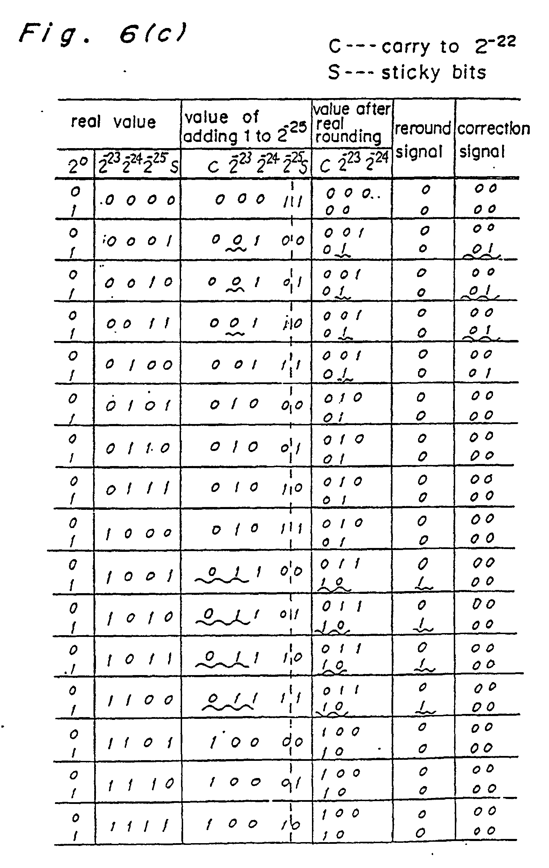

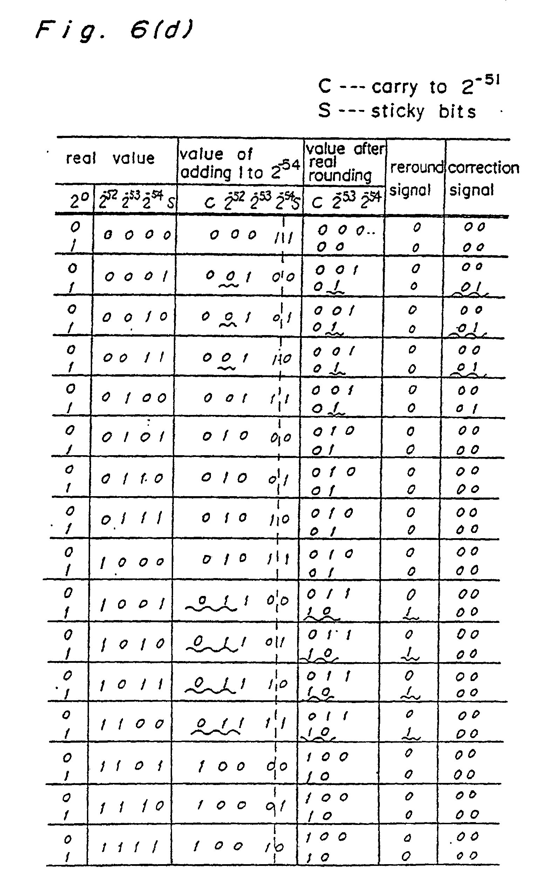

Although in the present embodiment at the directed rounding toward plus mode or at the directed rounding toward minus mode in accordance with the respective cases of the mantissa addition with single precision rounding, the mantissa subtraction of 0 or 1 in exponent difference with single precision rounding, the mantissa addition with double precision rounding, the mantissa subtraction of 0 or 1 in exponent difference with double precision rounding, the data are generated with the bits having the weights of $2^{-24}$, $2^{-25}$, $2^{-53}$, $2^{-54}$ in the round value generating circuit 106 being 1, the other bits being 0, the round correction repetitive control circuit 109 instructs the insertion of the step of the correction of the bits or the readdition of the round addition value in accordance with the correcting signal and the reround signal shown in the control relation charts of the Fig. 4 (a), (c), (b), (d). The data can be generated in the round value generaing circuit 106 with bits having $2^{-24}$ and its all the lower weights, $2^{-25}$ and its all the lower weights, $2^{-53}$ and its all the lower weights, $2^{-54}$ and its all the lower weights being 1, the other bits being 0. The round correction repetitive control circuit 109 can instruct the insertion of the step of the correction of the bits or the readdition of the round addition value in accordance with the correction signal and the reround signal shown in the control relation charts of the Fig. 6 (a), (c), (b), (d). In this manner, the probability necessary in the insertion of the 1 step is made as low as two thirty-seconds, thus improving the computing speed. In the the directed rounding toward plus mode or in the directed rounding toward minus mode, it is noticeable that the addition of 1 for rounding into the least significant bit (L) becomes necessary when the round bit (R) or the sticky bit (S) is 1. By the use of the carry generated by the addition of the data with the round bit and its all the lower bits being made 1 in bit position, the round addition into the least significant bit may be effected. A case where the round addition is not caused with the round bit and the sticky bit being both zero is shown in Fig. 12 (c). A case where the addition of 1 for rounding is caused except for above is shown in Fig. 12 (d), (e), (f).

In the present embodiment, both the precision of the format and the round precision of the augend, minuend and the addend, subtrahend are provided by way of single precision or double precision. Even in a case where the precision of the format and the round precision of the augend, minuend and the addend, subtrahend are different, the round addition value to be generated by the round value generating circuit 106 is the data with the round bit corresponding to the round precision being 1, the input bit number of the adder 107 is set to the maximum bit number of the data handling so that the round corresponding to the round precision may be realized without dependence upon the precision of the format of the augend, minuend and the addend, subtrahend.

Although in the present embodiment, in accordance with the respective cases of the mantissa addition with the single precision rounding, the mantissa subtraction of 0 or 1 in exponent difference with single precision rounding, the mantissa addition with double precision rounding, the mantissa subtraction of 0 or 1 in exponent difference with double precision rounding, the round correction repetitive control circuit 109 inspects the bits having the weights of $2^1$, $2^{-22}$, $2^{-23}$, $2^{-24}$, the bits having the weights of $2^0$, $2^{-23}$, $2^{-24}$, $2^{-25}$, the bits having the weights of $2^1$, $2^{-51}$, $2^{-52}$, $2^{-53}$, the bits having the weights of $2^0$, $2^{-52}$, $2^{-53}$, $2^{-54}$ of the output of the adder 107 and S bit so as to instruction the correction of the bits having the weights of $2^{-22}$ and $2^{-23}$, $2^{-22}$ and $2^{-23}$, $2^{-51}$ and $2^{-52}$, $2^{-51}$ and $2^{-52}$, the inspected bit and the corrected bit can be increased in the most significant bit direction. The probability necessary in the insertion of 1 step is halved for each 1 bit addition of the inspected bit and the corrected bit, thus improving the computing speed.

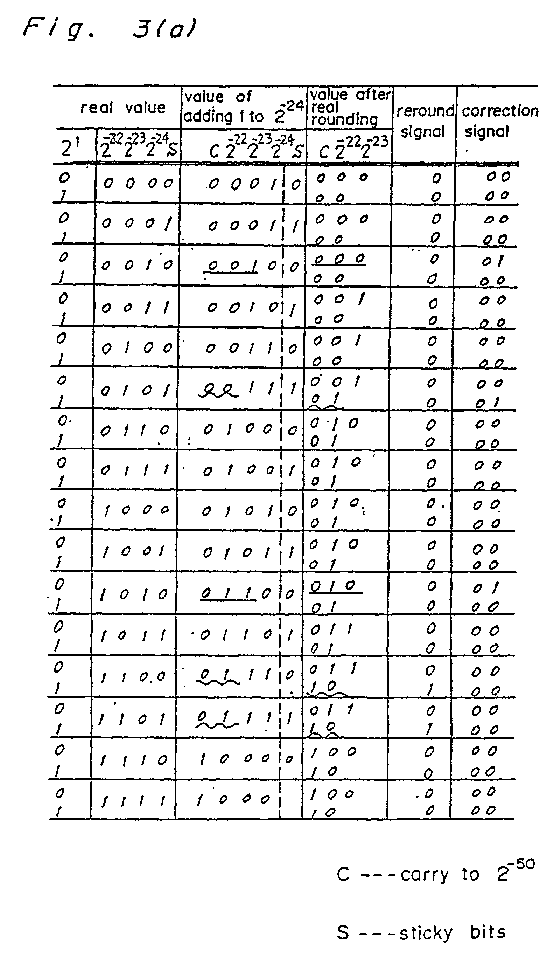

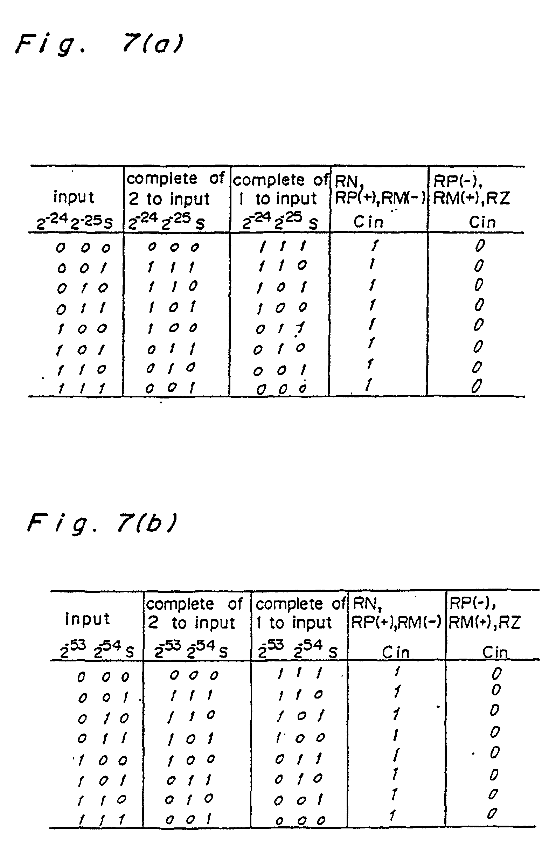

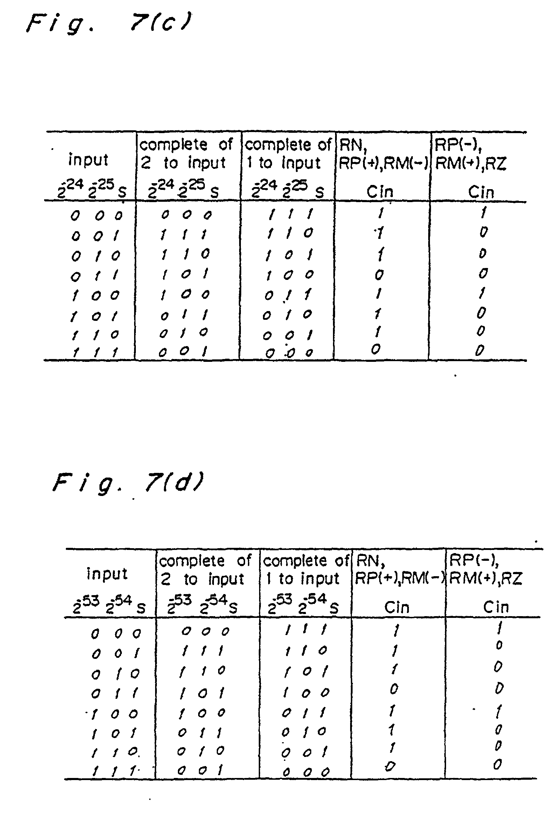

Fig. 2 shows a block diagram of the addition, subtraction apparatus of the floating point data in the second embodiment. It is to be noted that like parts in Fig. 2 are designated by like reference numerals in Fig. 1. In Fig. 2, reference numeral 114 is an adder of two inputs with the bit having the weight of $2^{-24}$ with the single precision as carry input (Cin), and the bit having the weight of $2^{-53}$ with the double precision as carry input (Cin), reference numeral 115 is a carry control apparatus for designing the carry input (Cin) of the adder 114. Fig. 7 is a control relation chart of the carry control apparatus 115, where the carry input (Cin) shown in Fig. 7 (a) when the mantissa addition is executed and the round precision is the single precision, in Fig. 7 (b) when the mantissa addition is executed, and the round precision is the double precision, in Fig. 7 (c) when the mantissa subtraction is executed, and the round precision is the single precision, in Fig. 2 (d) when the mantissa subtraction is executed and the round precision is the double precision is input into the adder 114.

The addition, subtraction apparatus of the floating point data in the present embodiment constructed as hereinabove will be described hereinafter in its operation. Instead of effecting the addition, subtraction of the mantissa of two floating point data and the addition of the round addition value generated by the round value generating circuit 106, by the adder 107 of three inputs in the first embodiment shown in Fig. 1, the present embodiment is adapted to operate the carry input (Cin) of the adder 114 of two inputs by the carry control apparatus 115 so as to effect the addition, subtraction of the mantissa and the addition of the round addition values. Only the operation of the addition, subtraction of the mantissas and the addition of the round addition value will be described hereinafter, with the other operations being the same as in the first embodiment.

· Mantissa addition time

At the rounding to nearest even mode, or when the sign of the computing result is positive in the directed rounding toward minus mode, or the sign of the computation result is negative in the directed rounding toward minus mode, the carry input (Cin) is made irrelevant, into 1, to the input data as shown in the columns of RN,RP (+),RM(-) of Fig. 7 (a), (b) so that $2^{-24}$, $2^{-53}$ are added as addition values in accordance with the round precision being the single precision or the double precision.

When the sign of the computation result is negative in the directed rounding toward plus mode or the sign of the computation result is positive in the directed rounding toward minus mode or at the directed rounding toward zero mode, the round addition values are not required to be added. Thus, the carry input (Cin) is made irrelevant, into 0, to the input data as shown in the columns of RP(-),RM(+), RZ of Fig. 7 (a), (b).

· Mantissa subtraction time except for exponent difference 0, 1

At the rounding to nearest even mode or when the sign of the computation result is positive in the directed rounding toward plus mode, or when the sign of the computation result is negative in the directed rounding toward minus mode, $2^{-25}$, $2^{-54}$ are required to be added as the round addition values in accordance with the round precision being the single precision or the double precision and 1 for the 2's complement is required to be added to the position of the sticky bit (S). So as to realize these additions, when at least one of the bit of $2^{-25}$ of the data (aligned and complemented by 1) to be added, and the sticky bit (S) is 1, or when at least one of the bit of $2^{-54}$ and the sticky bit (S) is 1, the carry input (Cin) into $2^{-24}$, $2^{-53}$ is made 1. When both the bit of $2^{-25}$ of the data to be added and the sticky bit (S) are 0, or when both the bit of $2^{-54}$ and the sticky bit (S) are 0, the carry input (Cin) into $2^{-24}$, $2^{-53}$ is made 0. Accordingly, the carry input (Cin) depended upon the input data as shown in the columns of RN, RP(+),RM(-) of Fig. 7 (c), (d) is generated.

When the sign of the computation result is negative in the directed rounding toward plus mode or the signs of the computation result is positive in the directed rounding toward minus mode or at the directed rounding toward zero mode, in accordance with the roung precision being the single precision or the double precision, 1 for 2's complement is required to be added to the position of the sticky bit (S). So as to realize this addition, when at least one of the bit of $2^{-25}$ of the data (aligned and complemented by 1) to be added and the sticky bit (S) is 1, or when at least one of the bit of $2^{-54}$ and the sticky bit (S) is 0, the carry input (Cin) into $2^{-24}$, $2^{-53}$ is made 0. When both the bit of $2^{-25}$ of the data to be added and the sticky bit (S) are 1, or when both the bit of $2^{-54}$ and the sticky bit (S) are 1, the carry input (Cin) into $2^{-24}$,

$2^{-53}$ is made 1 for realization thereof. Accordingly, the carry input (Cin) depended upon the input data as shown in the columns of RP(-),RM(+),RZ of Fig. 7 (c), (d) is generated.

· Mantissa subtraction time with the exponent difference 0, 1

The round is not executed simultaneously with the subtraction of the mantissas. But in accordance with the single precision or the double precision in the round precision, 1 for 2's complement is required to be added to the position of the sticky bit (S). So as to realize this addition, when at least one of the bit of $2^{-25}$ of the data (aligned and complemented by 1) to be added and the sticky bit (S) is 0, or when at least one of the bit of $2^{-54}$ and the sticky bit (S) is 0, the carry input (Cin) into $2^{-24}$, $2^{-53}$ is made 0. When both the bit of $2^{-25}$ of the data to be added and the sticky bit (S) are 1, or when both the bit of $2^{-54}$ and the sticky bit (S) are 1, the carry input (Cin) into $2^{-24}$, $2^{-53}$ is made 1. Accordingly, the carry input (Cin) depended upon the input data as shown in the columns of RP(-),RM(+),RZ of Fig. 7 (c), (d) are generated.

Even in the above described either case, the rounding to be effected with the step being inserted may be realized with the carry input (Cin) being 1 so as to effect the addition with $2^{-24}$, $2^{-53}$ as the round addition values in accordance with the single precision or the double precision in the round precision.

Even by the present embodiment, at the mantissa addition time or the mantissa subtraction time except for the exponent differences 0, 1, the sum of the three of two floating point data mantissas and the round addition value or the sum of two former difference and the latter are effected at the same time by the adder 114. As the result, in most of the cases (thirty thirty-seconds at the rounding to nearest even mode, twenty nine thirty-seconds at the directed rounding toward plus mode or the directed rounding toward minus mode, 1 at directed rounding toward zero mode), the processing step number necessary for the addition, subtraction becomes as small as 2. Even at the time of the mantissa subtraction time of the exponent differences 0, 1, the subtraction of the mantissas of two floating point data and the addition of the round addition value are effected at the same time by the adder 114, so that the number of the processing steps necessary in most of the cases becomes as small as 2. Even in the either case, as the addition, subtraction of the mantissas and the addition of the round addition values are executed by the single adder 114, the necessary hardwares are less as compared with the conventional addition, subtraction apparatus of the floating point data. The adder 114, which is composed of two inputs, becomes much less in hardware than in the fist embodiment.

## Claims

**1.** A data processing method for subjecting two floating point data to an arithmetic computation which includes real mantissa subtraction which is the subtraction of the two floating point data of a same sign or the addition of the two floating point data of different signs, the two floating point data respectively including first and second mantissas and first and second exponents, wherein a difference between the first and second exponents is 0 or 1, said method comprising when said difference of exponent is 0 or 1 a first step of effecting a subtraction of the first and second mantissas aligned to a same one of the first and second exponents to obtain a computation result;

**characterized by** a second step of either bit shifting the computation result to normalize the computation result when the computation result is a denormalized number, or adding a round addition value, which is determined according to a predetermined rounding precision and a predetermined rounding mode, to the computation result when the computation result is a normalized number to complete the processing, of said arithmetic computation.

**2.** A data processing method as recited in claim 1, wherein said first step is effected as a first data processing step, and the second step is inserted as a new data processing step after completion of said first step.

**3.** An addition, subtraction apparatus of the floating point data comprising a mantissa subtraction executing means for effecting the subtraction of the first, second mantissas aligned to the same exponent, a normalization means for shifting the operation result so as to effect the normalization when the computation result by the mantissa subtraction executing means are the denormalized number, a round addition means for adding the round addition values determined uniformly by the round precision and the round mode with respect to the operation result when the operation result by the mantissa subtraction executing means are normalized numbers, when the operation of the floating point data is in the real mantissa subtraction which is at the subtraction of the same signs or at the addition of the different signs and the exponent difference of the floating point data is 0 or 1, **characterized in that** said addition, substraction apparatus containing a means for effecting either the normalization by said normalization means or the rounding by said rounding addition means with respect to the operation result, when said exponent difference is 0 or 1, to complete said operation.

**4.** An addition, subtraction apparatus of the floating point data described in accordance with the claim 3, where the subtraction of the first, second mantissas in the mantissa subtraction executing means is effected in one machine cycle, the normalization in the normalizing means or the addition of the round addition values in the round adding means is effected through the insertion of the new machine cycle after the machine cycle completion.

## Patentansprüche

**1.** Ein Datenverarbeitungsverfahren zum Ausführen einer arithmetischen Berechnung mit einer echten Mantissensubtraktion an zwei Gleitkommadaten, welche in einer Subtraktion der beiden Gleitkommadaten mit gleichem Vorzeichen oder einer Addition der beiden Gleitkommadaten mit verschiedenem Vorzeichen besteht, wobei die beiden Gleitkommadaten eine erste bzw. eine zweite Mantisse und einen ersten bzw. zweiten Exponenten aufweisen und eine Differenz zwischen dem ersten und dem zweiten Exponenten 0 oder 1 ist, wobei das Verfahren bei einer Differenz der Exponenten von 0 oder 1 beinhaltet einen ersten Schritt des Ausführens einer Subtraktion der ersten und der zweiten Mantisse ausgerichtet auf den gleichen der ersten und zweiten Exponenten, um ein Berechnungsergebnis zu erhalten;

**gekennzeichnet durch** einen zweiten Schritt des entweder Bitverschiebens des Berechnungsergebnisses, um das Berechnungsergebnis zu normalisieren, wenn das Berechnungsergebnis keine normalisierte Zahl ist, oder Addierens eines Rundungsadditionswertes, welcher **durch** eine vorherbestimmte Rundungsgenauigkeit und einen vorherbestimmen Rundungsmodus bestimmt ist, zu dem Berechnungsergebnis, wenn das Berechnungsergebnisses eine normalisierte Zahl ist, um die Verarbeitung der arithmetischem Berechnung abzuschließen.

**2.** Ein Datenverarbeitungsverfahren entsprechend dem Anspruch 1, wobei der erste Schritt als ein erster Datenverarbeitungsschritt durchgeführt wid und der zweite Schritt als ein neuer Datenverarbeitungsschritt nach Abschluss des ersten Schrittes eingefügt wird

**3.** Eine Additions- und Subtraktionsvorrichtung für Gleitkommadaten mit Mantissensubtraktionausführungsmitteln zum Ausführen der Subtraktion der auf den gleichen Exponenten ausgerichteten ersten und zweiten Mantisse, Normalisierungsmitteln zum Verschieben des Verarbeitungsergebnisses, um eine Normalisierung zu bewirken, wenn das Berechnungsergebnis der Ausführungsmittel für die Mantissensubtraktion keine normalisierte Zahl ist, Rundungsadditionsmittel zum Addieren der Rundungsadditionswerte, die einheitlich durch die Rundungsgenauigkeit und den Rundungsmodus unter Berücksichtigung des Operationsergebnisses bestimmt sind, wenn das Operationsergebnis durch die Mantissensubtraktionausführungsmittel normalisierte Zahlen sind, wenn die Operation an den Gleitkommadaten aus einer echten Mantissensubtraktion, bestehend aus der Subtraktion bei gleichen Vorzeichen oder einer Addition bei verschiedenen Vorzeichen, besteht und die Differenz der Exponenten der Gleitkommadaten 0 oder 1 ist, **dadurch gekennzeichnet, dass** die Additions-, Subtraktionsvorrichtung aufweist ein Mittel zum Ausführen entweder der Normalisierung mit den Normalisierungsmitteln oder der Rundung mit den Rundungsadditionsmitteln unter Berücksichtigung des Operationsergebnis, wenn die Differenz der Exponenten 0 oder 1 beträgt, um die Operation abzuschließen.

**4.** Eine Additions- bzw. Subtraktionsvorrichtung für Gleitkommadaten entsprechend dem Anspruch 3, wobei die Subtraktion der ersten und zweiten Mantisse in den Mantissensubtraktionausführungsmitteln in einem Maschinenzyklus ausgeführt wird, und die Normalisierung in dem Normalisierungsmittel oder die Addition der Rundungsadditionswerte in den Rundungsadditionsmitteln durch Einfügung eines neuen Maschinenzyklus nach dem Abschluss des Maschinenzyklus ausgeführt wird.

## Revendications

**1.** Procédé de traitement de données destiné à soumettre deux données en virgule flottante à un calcul arithmétique qui comprend une soustraction d'une mantisse réelle qui représente la soustraction des deux données en virgule flottante de même signe ou l'addition de deux données en virgule flottante de signes différents, les deux données en virgule flottante comprenant respectivement des première et seconde mantisses et des premier et second exposants, dans lequel la différence entre les premier et second exposants est 0, ou 1, ledit procédé comprenant, lorsque ladite différence des exposants est 0 ou 1, une première étape consistant à réaliser une soustraction des première et seconde mantisses alignées sur le même des premier et second exposants afin d'obtenir un résultat de calcul,

**caractérisé par** une seconde étape consistant soit à décaler les bits du résultat du calcul pour normaliser le résultat du calcul lorsque le résultat du calcul est un nombre dénormalisé, soit ajouter une valeur d'addition arrondie qui est déterminée conformément à une précision d'arrondi prédéterminée et un mode d'arrondi prédéterminé au résultat du calcul lorsque le résultat du calcul est un nombre normalisé pour terminer le traitement dudit calcul arithmétique.

**2.** Procédé de traitement de données selon la revendication 1, dans lequel ladite première étape est réalisée sous forme d'une première étape de traitement de données, et la seconde étape est insérée en tant que nouvelle étape de traitement de données après l'achèvement de ladite première étape.

**3.** Dispositif d'addition et de soustraction des données en virgule flottante comprenant un moyen d'exécution de soustraction de mantisse destiné à réaliser la soustraction de la première et de la seconde mantisses alignées sur le même exposant, un moyen de normalisation destiné à décaler le résultat de l'opération de façon à réaliser la normalisation lorsque le résultat du calcul par le moyen d'exécution de soustraction de mantisse représente le nombre dénormalisé, un moyen d'addition d'arrondi destiné à additionner les valeurs d'addition arrondies déterminées uniformément par la précision de l'arrondi et le mode d'arrondi par rapport au résultat de l'opération lorsque le résultat de l'opération par le moyen d'exécution de soustraction de mantisse représente des nombres normalisés, lorsque l'opération sur les données en virgule flottante est dans la soustraction de mantisse réelle qui se fait à la soustraction des mêmes signes ou à l'addition des signes différents et la différence d'exposants des données en virgule flottantes est 0 ou 1, **caractérisé en ce que** ledit dispositif d'addition et de soustraction contient un moyen destiné à réaliser soit la normalisation par ledit moyen de normalisation, soit l'arrondi par ledit moyen d'addition d'arrondi par rapport au résultat de l'opération lorsque ladite différence d'exposants est 0 ou 1 afin de terminer ladite opération.

**4.** Dispositif d'addition et de soustraction de données en virgule flottante décrit selon la revendication 3, où la soustraction des première, seconde mantisses dans le moyen d'exécution de soustraction de mantisse est réalisée en un cycle de la machine, la normalisation dans le moyen de normalisation ou l'addition des valeurs d'addition d'arrondi dans le moyen d'addition d'arrondi est réalisée grâce à l'insertion du nouveau cycle de la machine après l'achèvement du cycle de la machine.

Fig. 1

Fig. 2

EP 0 973 089 B1

# Fig. 3(a)

| real value | | | | | value of adding 1 to $2^{-24}$ | | | | | value after real rounding | | | reround signal | correction signal |
|---|---|---|---|---|---|---|---|---|---|---|---|---|---|---|
| $2^1$ | $2^{-22}$ | $2^{-23}$ | $2^{-24}$ | S | C | $2^{-22}$ | $2^{-23}$ | $2^{-24}$ | S | C | $2^{-22}$ | $2^{-23}$ | | |
| 0 | 0 | 0 | 0 | 0 | .0 | 0 | 0 | 1 | 0 | 0 | 0 | 0 | 0 | 0 0 |
| 1 | | | | | | | | | | | 0 | 0 | 0 | 0 0 |
| 0 | 0 | 0 | 0 | 1 | 0 | 0 | 0 | 1 | 1 | 0 | 0 | 0 | 0 | 0 0 |
| 1 | | | | | | | | | | | 0 | 0 | 0 | 0 0 |
| 0 | 0 | 0 | 1 | 0 | 0 | 0 | 1 | 0 | 0 | 0 | 0 | 0 | 0 | 0 1 |
| 1 | | | | | | | | | | | 0 | 0 | 0 | 0 0 |
| 0 | 0 | 0 | 1 | 1 | 0 | 0 | 1 | 0 | 1 | 0 | 0 | 1 | 0 | 0 0 |
| 1 | | | | | | | | | | | 0 | 0 | 0 | 0 0 |
| 0 | 0 | 1 | 0 | 0 | 0 | 0 | 1 | 1 | 0 | 0 | 0 | 1 | 0 | 0 0 |
| 1 | | | | | | | | | | | 0 | 0 | 0 | 0 0 |
| 0 | 0 | 1 | 0 | 1 | ℓℓ | | 1 | 1 | 1 | 0 | 0 | 1 | 0 | 0 0 |
| 1 | | | | | | | | | | | 0 | 1 | 0 | 0 1 |
| 0 | 0 | 1 | 1 | 0 | 0 | 1 | 0 | 0 | 0 | 0 | 1 | 0 | 0 | 0 0 |
| 1 | | | | | | | | | | | 0 | 1 | 0 | 0 0 |
| 0 | 0 | 1 | 1 | 1 | 0 | 1 | 0 | 0 | 1 | 0 | 1 | 0 | 0 | 0 0 |
| 1 | | | | | | | | | | | 0 | 1 | 0 | 0 0 |
| 0 | 1 | 0 | 0 | 0 | 0 | 1 | 0 | 1 | 0 | 0 | 1 | 0 | 0 | 0 0 |
| 1 | | | | | | | | | | | 0 | 1 | 0 | 0 0 |
| 0 | 1 | 0 | 0 | 1 | 0 | 1 | 0 | 1 | 1 | 0 | 1 | 0 | 0 | 0 0 |
| 1 | | | | | | | | | | | 0 | 1 | 0 | 0 0 |
| 0 | 1 | 0 | 1 | 0 | 0 | 1 | 1 | 0 | 0 | 0 | 1 | 0 | 0 | 0 1 |
| 1 | | | | | | | | | | | 0 | 1 | 0 | 0 0 |
| 0 | 1 | 0 | 1 | 1 | ·0 | 1 | 1 | 0 | 1 | 0 | 1 | 1 | 0 | 0 0 |
| 1 | | | | | | | | | | | 0 | 1 | 0 | 0 0 |
| 0 | 1 | 1 | 0.0 | | ℓℓ | | 1 | 1 | 0 | 0 | 1 | 1 | 0 | 0 0 |
| 1 | | | | | | | | | | 1 | 0 | 1 | 0 0 |
| 0 | 1 | 1 | 0 | 1 | ℓℓ | | 1 | 1 | 1 | 0 | 1 | 1 | 0 | 0 0 |
| 1 | | | | | | | | | | 1 | 0 | 1 | 0 0 |
| 0 | 1 | 1 | 1 | 0 | 1 | 0 | 0 | 0 | 0 | 1 | 0 | 0 | 0 | 0 0 |
| 1 | | | | | | | | | | 1 | 0 | 0 | 0 0 |
| 0 | 1 | 1 | 1 | 1 | 1 | 0 | 0 | 0 | | 1 | 0 | 0 | 0 | 0 0 |
| 1 | | | | | | | | | | 1 | 0 | 0 | 0 0 |

C --- carry to $2^{-50}$

S --- sticky bits

## Fig. 3(b)

| real value | | | | | value of adding 1 to $2^{-53}$ | | | | | value after real rounding | | | reround signal | correction signal |
|---|---|---|---|---|---|---|---|---|---|---|---|---|---|---|
| $2^1$ | $2^{-51}$ | $2^{-52}$ | $2^{-53}$ | S | C | $2^{-51}$ | $2^{-52}$ | $2^{-53}$ | S | C | $2^{-51}$ | $2^{-52}$ | signal | signal |
| 0 | 0 | 0 | 0 | 0 | 0 | 0 | 0 | 1 | 0 | 0 | 0 | 0 | 0 | 0 0 |
| 1 | | | | | | | | | | | 0 | 0 | 0 | 0 0 |
| 0 | 0 | 0 | 0 | 1 | 0 | 0 | 0 | 1 | 1 | 0 | 0 | 0 | 0 | 0 0 |
| 1 | | | | | | | | | | | 0 | 0 | 0 | 0 0 |
| 0 | 0 | 0 | 1 | 0 | 0 | 0 | 1 | 0 | 0 | 0 | 0 | 0 | 0 | 0 1 |
| 1 | | | | | | | | | | | 0 | 0 | 0 | 0 0 |
| 0 | 0 | 0 | 1 | 1 | 0 | 0 | 1 | 0 | 1 | 0 | 0 | 1 | 0 | 0 0 |
| 1 | | | | | | | | | | | 0 | 0 | 0 | 0 0 |
| 0 | 0 | 1 | 0 | 0 | 0 | 0 | 1 | 1 | 0 | 0 | 0 | 1 | 0 | 0 0 |
| 1 | | | | | | | | | | | 0 | 0 | 0 | 0 0 |
| 0 | 0 | 1 | 0 | 1 | 0 | 0 | 1 | 1 | 1 | 0 | 0 | 1 | 0 | 0 0 |
| 1 | | | | | | | | | | | 0 | 1 | 0 | 0 1 |
| 0 | 0 | 1 | 1 | 0 | 0 | 1 | 0 | 0 | 0 | 0 | 1 | 0 | 0 | 0 0 |
| 1 | | | | | | | | | | | 0 | 1 | 0 | 0 0 |
| 0 | 0 | 1 | 1 | 1 | 0 | 1 | 0 | 0 | 1 | 0 | 1 | 0 | 0 | 0 0 |
| 1 | | | | | | | | | | | 0 | 1 | 0 | 0 1 |
| 0 | 1 | 0 | 0 | 0 | 0 | 1 | 0 | 1 | 0 | 0 | 1 | 0 | 0 | 0 0 |
| 1 | | | | | | | | | | | 0 | 1 | 0 | 0 0 |
| 0 | 1 | 0 | 0 | 1 | 0 | 1 | 0 | 1 | 1 | 0 | 1 | 0 | 0 | 0 0 |
| 1 | | | | | | | | | | | 0 | 1 | 0 | 0 0 |
| 0 | 1 | 0 | 1 | 0 | 0 | 1 | 1 | 0 | 0 | 0 | 1 | 0 | 0 | 0 1 |
| 1 | | | | | | | | | | | 0 | 1 | 0 | 0 0 |
| 0 | 1 | 0 | 1 | 1 | 0 | 1 | 1 | 0 | 1 | 0 | 1 | 1 | 0 | 0 0 |
| 1 | | | | | | | | | | | 0 | 1 | 0 | 0 0 |
| 0 | 1 | 1 | 0 | 0 | 0 | 1 | 1 | 1 | 0 | 0 | 1 | 1 | 0 | 0 0 |
| 1 | | | | | | | | | | | 1 | 0 | 1 | 0 0 |
| 0 | 1 | 1 | 0 | 1 | 0 | 1 | 1 | 1 | 1 | 0 | 1 | 1 | 0 | 0 0 |
| 1 | | | | | | | | | | | 1 | 0 | 1 | 0 0 |
| 0 | 1 | 1 | 1 | 0 | 1 | 0 | 0 | 0 | 0 | 1 | 0 | 0 | 0 | 0 0 |
| 1 | | | | | | | | | | | 1 | 0 | 0 | 0 0 |
| 0 | 1 | 1 | 1 | 1 | 1 | 0 | 0 | 0 | 1 | 1 | 0 | 0 | 0 | 0 0 |
| 1 | | | | | | | | | | | 1 | 0 | 0 | 0 0 |

C --- carry to $2^{-21}$

S --- sticky bits

## Fig. 3(c)

| 2⁰ | real value<br>2⁻²³ 2⁻²⁴ 2⁻²⁵ S | value of adding 1 to 2⁻²⁵<br>C 2⁻²³ 2⁻²⁴ 2⁻²⁵ S | value after real rounding<br>C 2⁻²³ 2⁻²⁴ | reround signal | correction signal |
|---|---|---|---|---|---|
| 0 | 0 0 0 0 | 0 0 0 1 \| 0 | 0 0 0 . | 0 | 0 0 |
| 1 |  |  | 0 0 | 0 | 0 0 |
| 0 | 0 0 0 1 | 0 0 0 1 \| 1 | 0 0 0 . | 0 | 0 0 |
| 1 |  |  | 0 0 | 0 | 0 0 |
| 0 | 0 0 1 0 | 0 0 1 0 \| 0 | 0 0 0 | 0 | 0 1 |
| 1 |  |  | 0 0 | 0 | 0 0 |
| 0 | 0 0 1 1 | 0 0 1 0 \| 1 | 0 0 1 | 0 | 0 0 |
| 1 |  |  | 0 0 | 0 | 0 0 |
| 0 | 0 1 0 0 | 0 0 1 1 \| 0 | 0 0 1 | 0 | 0 0 |
| 1 |  |  | 0 0 | 0 | 0 0 |
| 0 | 0 1 0 1 | 0 0 1 1 \| 1 | 0 0 1 | 0 | 0 0 |
| 1 |  |  | 0 1 | 0 | 0 1 |
| 0 | 0 1 1 0 | 0 1 0 0 \| 0 | 0 1 0 | 0 | 0 0 |
| 1 |  |  | 0 1 | 0 | 0 0 |
| 0 | 0 1 1 1 | 0 1 0 0 \| 1 | 0 1 0 | 0 | 0 0 |
| 1 |  |  | 0 . 1 | 0 | 0 0 |
| 0 | 1 0 0 0 | 0 1 0 1 \| 0 | 0 1 0 | 0 | 0 0 |
| 1 |  |  | 0 1 | 0 | 0 0 |
| 0 | 1 0 0 1 | 0 1 0 1 \| 1 | 0 1 0 | 0 | 0 0 |
| 1 |  |  | 0 1 | 0 | 0 0 |
| 0 | 1 0 1 0 | 0 1 1 0 \| 0 | 0 1 0 | 0 | 0 1 |
| 1 |  |  | 0 1 | 0 | 0 0 |
| 0 | 1 0 1 1 | 0 1 1 0 \| 1 | 0 1 1 | 0 | 0 0 |
| 1 |  |  | 0 1 | 0 | 0 0 |
| 0 | 1 1 0 0 | 0 1 1 1 \| 0 | 0 1 1 | 0 | 0 0 |
| 1 |  |  | 1 0 | 1 | 0 0 |
| 0 | 1 1 0 1 | 0 1 1 1 \| 1 | 0 1 1 | 0 | 0 0 |
| 1 |  |  | 1 0 | 1 | 0 0 |
| 0 | 1 1 1 0 | 1 0 0 0 \| 0 | 1 0 0 | 0 | 0 0 |
| 1 |  |  | 1 0 | 0 | 0 0 |
| 0 | 1 1 1 1 | 1 0 0 0 \| 1 | 1 0 0 | 0 | 0 0 |
| 1 |  |  | 1 0 . | 0 | 0 0 |

C --- carry to 2⁻²²

S --- sticky bits

EP 0 973 089 B1

# Fig. 3(d)

| real value |  |  |  |  | value of adding 1 to $2^{-54}$ |  |  |  |  | value after real rounding |  |  | reround signal | correction signal |
|---|---|---|---|---|---|---|---|---|---|---|---|---|---|---|
| $2^0$ | $2^{-52}$ | $2^{-53}$ | $2^{-54}$ | S | C | $2^{-52}$ | $2^{-53}$ | $2^{-54}$ | S | C | $2^{-52}$ | $2^{-53}$ | | |
| 0 | 0 | 0 | 0 | | 0 | 0 | 0 | 1 | 0 | 0 | 0 | 0 | 0 | 0 0 |
| 1 | | | | | | | | | | | 0 | 0 | 0 | 0 0 |
| 0 | 0 | 0 | 0 | 1 | 0 | 0 | 0 | 1 | 1 | 0 | 0 | 0 | 0 | 0 0 |
| 1 | | | | | | | | | | | 0 | 0 | 0 | 0 0 |
| 0 | 0 | 0 | 1 | 0 | 0 | 0 | 1 | 0 | 0 | 0 | 0 | 0 | 0 | 0 1 |
| 1 | | | | | | | | | | | 0 | 0 | 0 | 0 0 |
| 0 | 0 | 0 | 1 | 1 | 0 | 0 | 1 | 0 | 1 | 0 | 0 | 1 | 0 | 0 0 |
| 1 | | | | | | | | | | | 0 | 0 | 0 | 0 0 |
| 0 | 0 | 1 | 0 | 0 | 0 | 0 | 1 | 1 | 0 | 0 | 0 | 1 | 0 | 0 0 |
| 1 | | | | | | | | | | | 0 | 0 | 0 | 0 0 |
| 0 | 0 | 1 | 0 | 1 | 0 | 0 | 1 | 1 | 1 | 0 | 0 | 1 | 0 | 0 0 |
| 1 | | | | | | | | | | | 0 | 1 | 0 | 0 1 |
| 0 | 0 | 1 | 1 | 0 | 0 | 1 | 0 | 0 | 0 | 0 | 1 | 0 | 0 | 0 0 |
| 1 | | | | | | | | | | | 0 | 1 | 0 | 0 0 |
| 0 | 0 | 1 | 1 | 1 | 0 | 1 | 0 | 0 | 1 | 0 | 1 | 0 | 0 | 0 0 |
| 1 | | | | | | | | | | | 0 | 1 | 0 | 0 0 |
| 0 | 1 | 0 | 0 | 0 | 0 | 1 | 0 | 1 | 0 | 0 | 1 | 0 | 0 | 0 0 |
| 1 | | | | | | | | | | | 0 | 1 | 0 | - 0 0 |
| 0 | 1 | 0 | 0 | 1 | 0 | 1 | 0 | 1 | 1 | 0 | 1 | 0 | 0 | 0 0 |
| 1 | | | | | | | | | | | 0 | 1 | 0 | 0 0 |
| 0 | 1 | 0 | 1 | 0 | 0 | 1 | 1 | 0 | 0 | 0 | 1 | 0 | 0 | 0 1 |
| 1 | | | | | | | | | | | 0 | 1 | 0 | 0 0 |
| 0 | 1 | 0 | 1 | 1 | 0 | 1 | 1 | 0 | 1 | 0 | 1 | 1 | 0 | 0 0 |
| 1 | | | | | | | | | | | 0 | 1 | 0 | 0 0 |
| 0 | 1 | 1 | 0 | 0 | 0 | 1 | 1 | 1 | 0 | 0 | 1 | 1 | 0 | 0 0 |
| 1 | | | | | | | | | | | 1 | 0 | 1 | 0 0 |
| 0 | 1 | 1 | 0 | 1 | 0 | 1 | 1 | 1 | 1 | 0 | 1 | 1 | 0 | 0 0 |
| 1 | | | | | | | | | | | 1 | 0 | 1 | 0 0 |
| 0 | 1 | 1 | 1 | 0 | 1 | 0 | 0 | 0 | 0 | 1 | 0 | 0 | 0 | 0 0 |
| 1 | | | | | | | | | | | 1 | 0 | 0 | 0 0 |
| 0 | 1 | 1 | 1 | 1 | 1 | 0 | 0 | 0 | 1 | 1 | 0 | 0 | 0 | 0 0 |
| 1 | | | | | | | | | | | 1 | 0 | 0 | 0 0 |

C --- carry to 2

S --- sticky bits

25

# Fig. 4(a)

C --- carry to $2^{-21}$
S --- sticky bits

| real value | | value of adding 1 to $2^{-24}$ | value after real rounding | reround signal | correction signal |
|---|---|---|---|---|---|
| $2^1$ | $2^{-22}\ 2^{-23}\ 2^{-24}\ S$ | $C\ 2^{-22}\ 2^{-23}\ 2^{-24}\ S$ | $C\ 2^{-22}\ 2^{-23}$ | | |
| 0 | 0 0 0 0 | 0 0 0 1 0 | 0 0 0 | 0 | 0 0 |
| 1 | | | 0 0 | 0 | 0 0 |
| 0 | 0 0 0 1 | 0 0 0 1 1 | 0 0 1 | 0 | 0 1 |
| 1 | | | 0 1 | 0 | 0 1 |
| 0 | 0 0 1 0 | 0 0 1 0 0 | 0 0 1 | 0 | 0 0 |
| 1 | | | 0 1 | 0 | 0 1 |
| 0 | 0 0 1 1 | 0 0 1 0 1 | 0 0 1 | 0 | 0 0 |
| 1 | | | 0 1 | 0 | 0 1 |
| 0 | 0 1 0 0 | 0 0 1 1 0 | 0 0 1 | 0 | 0 0 |
| 1 | | | 0 1 | 0 | 0 1 |
| 0 | 0 1 0 1 | 0 0 1 1 1 | 0 1 0 | 0 | 1 0 |
| 1 | | | 0 1 | 0 | 0 1 |
| 0 | 0 1 1 0 | 0 1 0 0 0 | 0 1 0 | 0 | 0 0 |
| 1 | | | 0 1 | 0 | 0 0 |
| 0 | 0 1 1 1 | 0 1 0 0 1 | 0 1 0 | 0 | 0 0 |
| 1 | | | 0 1 | 0 | 0 0 |
| 0 | 1 0 0 0 | 0 1 0 1 0 | 0 1 0 | 0 | 0 0 |
| 1 | | | 0 1 | 0 | 0 0 |
| 0 | 1 0 0 1 | 0 1 0 1 1 | 0 1 1 | 0 | 0 1 |
| 1 | | | 1 0 | 1 | 0 1 |
| 0 | 1 0 1 0 | 0 1 1 0 0 | 0 1 1 | 0 | 0 0 |
| 1 | | | 1 0 | 1 | 0 0 |
| 0 | 1 0 1 1 | 0 1 1 0 1 | 0 1 1 | 0 | 0 0 |
| 1 | | | 1 0 | 1 | 0 0 |
| 0 | 1 1 0 0 | 0 1 1 1 0 | 0 1 1 | 0 | 0 0 |
| 1 | | | 1 0 | 1 | 0 0 |
| 0 | 1 1 0 1 | 0 1 1 1 1 | 1 0 0 | 1 | 0 0 |
| 1 | | | 1 0 | 1 | 0 0 |
| 0 | 1 1 1 0 | 1 0 0 0 0 | 1 0 0 | 0 | 0 0 |
| 1 | | | 1 0 | 0 | 0 0 |
| 0 | 1 1 1 1 | 1 0 0 0 1 | 1 0 0 | 0 | 0 0 |
| 1 | | | 1 0 | 0 | 0 0 |

26

## Fig. 4(b)

C --- carry to $2^{-50}$
S --- sticky bits

| real value | | | | | value of adding 1 to $2^{-53}$ | | | | | value after real rounding | | | reround signal | correction signal |
|---|---|---|---|---|---|---|---|---|---|---|---|---|---|---|
| $2^1$ | $2^{-51}$ | $2^{-52}$ | $2^{-53}$ | S | C | $2^{-51}$ | $2^{-52}$ | $2^{-53}$ | S | C | $2^{-51}$ | $2^{-52}$ | | |
| 0 | 0 | 0 | 0 | 0 | 0 | 0 | 0 | 1 | 0 | 0 | 0 | 0 | 0 | 0 0 |
| 1 | | | | | | | | | | 0 | 0 | | 0 | 0 0 |
| 0 | 0 | 0 | 0 | 1 | 0 | 0 | 0 | 1 | 1 | 0 | 0 | 1 | 0 | 0 1 |
| 1 | | | | | | | | | | 0 | 1 | | 0 | 0 1 |
| 0 | 0 | 0 | 1 | 0 | 0 | 0 | 1 | 0 | 0 | 0 | 0 | 1 | 0 | 0 0 |
| 1 | | | | | | | | | | 0 | 1 | | 0 | 0 1 |
| 0 | 0 | 0 | 1 | 1 | 0 | 0 | 1 | 0 | 1 | 0 | 0 | 1 | 0 | 0 0 |
| 1 | | | | | | | | | | 0 | 1 | | 0 | 0 1 |
| 0 | 0 | 1 | 0 | 0 | 0 | 0 | 1 | 1 | 0 | 0 | 0 | 1 | 0 | 0 0 |
| 1 | | | | | | | | | | 0 | 1 | | 0 | 0 1 |
| 0 | 0 | 1 | 0 | 1 | 0 | 0 | 1 | 1 | 1 | 0 | 1 | 0 | 0 | 1 0 |
| 1 | | | | | | | | | | 0 | 1 | | 0 | 0 1 |
| 0 | 0 | 1 | 1 | 0 | 0 | 1 | 0 | 0 | 0 | 0 | 1 | 0 | 0 | 0 0 |
| 1 | | | | | | | | | | 0 | 1 | | 0 | 0 0 |
| 0 | 0 | 1 | 1 | 1 | 0 | 1 | 0 | 0 | 1 | 0 | 1 | 0 | 0 | 0 0 |
| 1 | | | | | | | | | | 0 | 1 | | 0 | 0 0 |
| 0 | 1 | 0 | 0 | 0 | 0 | 1 | 0 | 1 | 0 | 0 | 1 | 0 | 0 | 0 0 |
| 1 | | | | | | | | | | 0 | 1 | | 0 | 0 0 |
| 0 | 1 | 0 | 0 | 1 | 0 | 1 | 0 | 1 | 1 | 0 | 1 | 1 | 0 | 0 1 |
| 1 | | | | | | | | | | 1 | 0 | | 1 | 0 1 |
| 0 | 1 | 0 | 1 | 0 | 0 | 1 | 1 | 0 | 0 | 0 | 1 | 1 | 0 | 0 0 |
| 1 | | | | | | | | | | 1 | 0 | | 1 | 0 0 |
| 0 | 1 | 0 | 1 | 1 | 0 | 1 | 1 | 0 | 1 | 0 | 1 | 1 | 0 | 0 0 |
| 1 | | | | | | | | | | 1 | 0 | | 1 | 0 0 |
| 0 | 1 | 1 | 0 | 0 | 0 | 1 | 1 | 1 | 0 | 0 | 1 | 1 | 0 | 0 0 |
| 1 | | | | | | | | | | 1 | 0 | | 1 | 0 0 |
| 0 | 1 | 1 | 0 | 1 | 0 | 1 | 1 | 1 | 1 | 1 | 0 | 0 | 1 | 0 0 |
| 1 | | | | | | | | | | 1 | 0 | | 1 | 0 0 |
| 0 | 1 | 1 | 1 | 0 | 1 | 0 | 0 | 0 | 0 | 1 | 0 | 0 | 0 | 0 0 |
| 1 | | | | | | | | | | 1 | 0 | | 0 | 0 0 |
| 0 | 1 | 1 | 1 | 1 | 1 | 0 | 0 | 0 | 1 | 1 | 0 | 0 | 0 | 0 0 |
| 1 | | | | | | | | | | 1 | 0 | | 0 | 0 0 |

# Fig. 4(c)

C --- carry to $2^{-22}$
S --- sticky bits

| real value $2^0$ | real value $2^{-23}\,2^{-24}\,2^{-25}\,S$ | value of adding 1 to $2^{-25}$ $C\;2^{-23}\,2^{-24}\,2^{-25}\,S$ | value after real rounding $C\;2^{-23}\,2^{-24}$ | reround signal | correction signal |
|---|---|---|---|---|---|
| 0 | 0 0 . 0 0 | 0 0 0 1 \| 0 | 0 0 0 | 0 | 0 0 |
| 1 | | | 0 0 | 0 | 0 0 |
| 0 | 0 0 0 1 | 0 0 0 1 \| 1 | 0 0 1 | 0 | 0 1 |
| 1 | | | 0 1 | 0 | 0 1 |
| 0 | 0 0 1 0 | 0 0 1 0 \| 0 | 0 0 1 | 0 | 0 0 |
| 1 | | | 0 1 | 0 | 0 1 |
| 0 | 0 0 1 1 | 0 0 1 0 \| 1 | 0 0 1 | 0 | 0 0 |
| 1 | | | 0 1 | 0 | 0 1 |
| 0 | 0 1 0 0 | 0 0 1 1 \| 0 | 0 0 1 | 0 | 0 0 |
| 1 | | | 0 1 | 0 | 0 1 |
| 0 | 0 1 0 1 | 0 0 1 1 \| 1 | 0 1 0 | 0 | 1 0 |
| 1 | | | 0 1 | 0 | 0 1 |
| 0 | 0 1 1 0 | 0 1 0 0 \| 0 | 0 1 0 | 0 | 0 0 |
| 1 | | | 0 1 | 0 | 0 0 |
| 0 | 0 1 1 1 | 0 1 0 0 \| 1 | 0 1 0 | 0 | 0 0 |
| 1 | | | 0 1 | 0 | 0 0 |
| 0 | 1 0 0 0 | 0 1 0 1 \| 0 | 0 1 0 | 0 | 0 0 |
| 1 | | | 0 1 | 0 | 0 0 |
| 0 | 1 0 0 1 | 0 1 0 1 \| 1 | 0 1 1 | 0 | 0 1 |
| 1 | | | 1 0 | 1 | 0 1 |
| 0 | 1 0 1 0 | 0 1 1 0 \| 0 | 0 1 1 | 0 | 0 0 |
| 1 | | | 1 0 | 1 | 0 0 |
| 0 | 1 0 1 1 | 0 1 1 0 \| 1 | 0 1 1 | 0 | 0 0 |
| 1 | | | 1 0 | 1 | 0 0 |
| 0 | 1 1 0 0 | 0 1 1 1 \| 0 | 0 1 1 | 0 | 0 0 |
| 1 | | | 1 0 | 1 | 0 0 |
| 0 | 1 1 0 1 | 0 1 1 1 \| 1 | 1 0 0 | 1 | 0 0 |
| 1 | | | 1 0 | 1 | 0 0 |
| 0 | 1 1 1 0 | 1 0 0 0 \| 0 | 1 0 0 | 0 | 0 0 |
| 1 | | | 1 0 | 0 | 0 0 |
| 0 | 1 1 1 1 | 1 0 0 0 \| 1 | 1 0 0 | 0 | 0 0 |
| 1 | | | 1 0 | 0 | 0 0 |

# Fig. 4(d)

$C$ --- carry to $2^{-51}$
$S$ --- sticky bits

| real value | | value of adding 1 to $2^{-54}$ | | value after real rounding | | reround signal | correction signal |
|---|---|---|---|---|---|---|---|
| $2^0$ | $2^{-52}\,2^{-53}\,2^{-54}\,S$ | $C$ | $2^{-52}\,2^{-53}\,2^{-54}\,S$ | $C$ | $2^{-52}\,2^{-53}$ | | |
| 0 | 0 0 0 0 | 0 | 0 0 1 \| 0 | 0 | 0 0 | 0 | 0 0 |
| 1 | | | | 0 | 0 | 0 | 0 0 |
| 0 | 0 0 0 1 | 0 | 0 0 1 \| 1 | 0 | 0 1 | 0 | 0 1 |
| 1 | | | | 0 | 1 | 0 | 0 1 |
| 0 | 0 0 1 0 | 0 | 1 0 \| 0 | 0 | 0 1 | 0 | 0 0 |
| 1 | | | | 0 | 1 | 0 | 0 1 |
| 0 | 0 0 1 1 | 0 | 1 0 \| 1 | 0 | 0 1 | 0 | 0 0 |
| 1 | | | | 0 | 1 | 0 | 0 1 |
| 0 | 0 1 0 0 | 0 | 1 1 \| 0 | 0 | 0 1 | 0 | 0 0 |
| 1 | | | | 0 | 1 | 0 | 0 1 |
| 0 | 0 1 0 1 | 0 | 1 1 \| 1 | 0 | 1 0 | 0 | 1 0 |
| 1 | | | | 0 | 1 | 0 | 0 1 |
| 0 | 0 1 1 0 | 0 | 1 0 0 \| 0 | 0 | 1 0 | 0 | 0 0 |
| 1 | | | | 0 | 1 | 0 | 0 0 |
| 0 | 0 1 1 1 | 0 | 1 0 0 \| 1 | 0 | 1 0 | 0 | 0 0 |
| 1 | | | | 0 | 1 | 0 | 0 0 |
| 0 | 1 0 0 0 | 0 | 1 0 1 \| 0 | 0 | 1 0 | 0 | 0 0 |
| 1 | | | | 0 | 1 | 0 | 0 0 |
| 0 | 1 0 0 1 | 0 | 1 0 1 \| 1 | 0 | 1 1 | 0 | 0 1 |
| 1 | | | | 1 | 0 | 1 | 0 1 |
| 0 | 1 0 1 0 | 0 | 1 1 0 \| 0 | 0 | 1 1 | 0 | 0 0 |
| 1 | | | | 1 | 0 | 1 | 0 0 |
| 0 | 1 0 1 1 | 0 | 1 1 0 \| 1 | 0 | 1 1 | 0 | 0 0 |
| 1 | | | | 1 | 0 | 1 | 0 0 |
| 0 | 1 1 0 0 | 0 | 1 1 1 \| 0 | 0 | 1 1 | 0 | 0 0 |
| 1 | | | | 1 | 0 | 1 | 0 0 |
| 0 | 1 1 0 1 | 0 | 1 1 \| 1 | 1 | 0 0 | 1 | 0 0 |
| 1 | | | | 1 | 0 | 1 | 0 0 |
| 0 | 1 1 1 0 | 1 | 0 0 0 \| 0 | 1 | 0 0 | 0 | 0 0 |
| 1 | | | | 1 | 0 | 0 | 0 0 |
| 0 | 1 1 1 1 | 1 | 0 0 0 \| 1 | 1 | 0 0 | 0 | 0 0 |
| 1 | | | | 1 | 0 | 0 | 0 0 |

## Fig. 5(a)

C---carry to $2^{-21}$
S---sticky bits

| real value | | value of adding 1 to $2^{-23}$ | | value after real rounding | | reround signal | correction signal |
|---|---|---|---|---|---|---|---|
| $2^1$ | $2^{-22} 2^{-23} 2^{-24}$ S | C $2^{-22} 2^{-23} 2^{-24}$ S | | C $2^{-22} 2^{-23}$ | | | |
| 0 / 1 | 0 0 0 0 | 0 0 1 | 0¦0 | 0 0 2 / 0 0 | | 0 / 0 | 0 1 / 0 0 |
| 0 / 1 | 0 0 0 1 | 0 0 1 | 0¦1 | 0 0 1 / 0 1 | | 0 / 0 | 0 0 / 0 1 |
| 0 / 1 | 0 0 1 0 | 0 0 1 | 1¦0 | 0 0 1 / 0 1 | | 0 / 0 | 0 0 / 0 1 |
| 0 / 1 | 0 0 1 1 | 0 0 1 | 1¦1 | 0 0 1 / 0 1 | | 0 / 0 | 0 0 / 0 1 |
| 0 / 1 | 0 1 0 0 | 0 1 0 | 0¦0 | 0 0 1 / 0 1 | | 0 / 0 | 1 0 / 0 0 |
| 0 / 1 | 0 1 0 1 | 0 1 0 | 0¦1 | 0 1 0 / 0 1 | | 0 / 0 | 0 0 / 0 0 |
| 0 / 1 | 0 1 1 0 | 0 1 0 | 1¦0 | 0 1 0 / 0 1 | | 0 / 0 | 0 0 / 0 0 |
| 0 / 1 | 0 1 1 1 | 0 1 0 | 1¦1 | 0 1 0 / 0 1 | | 0 / 0 | 0 0 / 0 0 |
| 0 / 1 | 1 0 0 0 | 0 1 1 | 0¦0 | 0 1 0 / 0 1 | | 0 / 0 | 0 1 / 0 0 |
| 0 / 1 | 1 0 0 1 | 0 1 1 | 0¦1 | 0 1 1 / 1 0 | | 0 / 1 | 0 0 / 0 0 |
| 0 / 1 | 1 0 1 0 | 0 1 1 | 1¦0 | 0 1 1 / 1 0 | | 0 / 1 | 0 0 / 0 0 |
| 0 / 1 | 1 0 1 1 | 0 1 1 | 1¦1 | 0 1 1 / 1 0 | | 0 / 1 | 0 0 / 0 0 |
| 0 / 1 | 1 1 0 0 | 1 0 0 | 0¦0 | 0 1 1 / 1 0 | | 1 / 0 | 1 1 / 0 0 |
| 0 / 1 | 1 1 0 1 | 1 0 0 | 0¦1 | 1 0 0 / 1 0 | | 0 / 0 | 0 0 / 0 0 |
| 0 / 1 | 1 1 1 0 | 1 0 0 | 1¦0 | 1 0 0 / 1 0 | | 0 / 0 | 0 0 / 0 0 |
| 0 / 1 | 1 1 1 1 | 1 0 0 | 1¦1 | 1 0 0 / 1 0 | | 0 / 0 | 0 0 / 0 0 |

## Fig. 5(b)

C --- carry to $2^{-50}$

S --- sticky bits

| real value | | | | | value of adding 1 to $2^{-52}$ | | | | | value after real rounding | | | reround signal | correction signal |
|---|---|---|---|---|---|---|---|---|---|---|---|---|---|---|
| $2^1$ | $2^{-51}$ | $2^{-52}$ | $2^{-53}$ | S | c | $2^{-51}$ | $2^{-52}$ | $2^{-53}$ | S | c | $2^{-51}$ | $2^{-52}$ | | |
| 0 | 0 | 0 | 0 | 0 | | 0 | 0 | 1 | 010 | | 0 | 0 | 0 | 0 | 0 1 |
| 1 | | | | | | | | | | | 0 | 0 | 0 | 0 0 |
| 0 | 0 | 0 | 0 | 1 | | 0 | 0 | 1 | 0 1 | | 0 | 0 | 1 | 0 | 0 0 |
| 1 | | | | | | | | | | | 0 | 1 | 0 | 0 1 |
| 0 | 0 | 0 | 1 | 0 | | 0 | 0 | 1 | 1 0 | | 0 | 0 | 1 | 0 | 0 0 |
| 1 | | | | | | | | | | | 0 | 1 | 0 | 0 1 |
| 0 | 0 | 0 | 1 | 1 | | 0 | 0 | 1 | 1 1 | | 0 | 0 | 1 | 0 | 0 0 |
| 1 | | | | | | | | | | | 0 | 1 | 0 | 0 1 |
| 0 | 0 | 1 | 0 | 0 | | 0 | 1 | 0 | 0 0 | | 0 | 0 | 1 | 0 | 1 0 |
| 1 | | | | | | | | | | | 0 | 1 | 0 | 0 0 |
| 0 | 0 | 1 | 0 | 1 | | 0 | 1 | 0 | 0 1 | | 0 | 1 | 0 | 0 | 0 0 |
| 1 | | | | | | | | | | | 0 | 1 | 0 | 0 0 |
| 0 | 0 | 1 | 1 | 0 | | 0 | 1 | 0 | 1 0 | | 0 | 1 | 0 | 0 | 0 0 |
| 1 | | | | | | | | | | | 0 | 1 | 0 | 0 0 |
| 0 | 0 | 1 | 1 | 1 | | 0 | 1 | 0 | 1 1 | | 0 | 1 | 0 | 0 | 0 0 |
| 1 | | | | | | | | | | | 0 | 1 | 0 | 0 0 |
| 0 | 1 | 0 | 0 | 0 | | 0 | 1 | 1 | 0 0 | | 0 | 1 | 0 | 0 | 0 1 |
| 1 | | | | | | | | | | | 0 | 1 | 0 | 0 0 |
| 0 | 1 | 0 | 0 | 1 | | 0 | 1 | 1 | 0 1 | | 0 | 1 | 1 | 0 | 0 0 |
| 1 | | | | | | | | | | | 1 | 0 | 1 | 0 0 |
| 0 | 1 | 0 | 1 | 0 | | 0 | 1 | 1 | 1 0 | | 0 | 1 | 1 | 0 | 0 0 |
| 1 | | | | | | | | | | | 1 | 0 | 1 | 0 0 |
| 0 | 1 | 0 | 1 | 1 | | 0 | 1 | 1 | 1 1 | | 0 | 1 | 1 | 0 | 0 0 |
| 1 | | | | | | | | | | | 1 | 0 | 1 | 0 0 |
| 0 | 1 | 1 | 0 | 0 | | 1 | 0 | 0 | 0 0 | | 0 | 1 | 1 | 1 | 1 1 |
| 1 | | | | | | | | | | | 1 | 0 | 0 | 0 0 |
| 0 | 1 | 1 | 0 | 1 | | 1 | 0 | 0 | 0 1 | | 1 | 0 | 0 | 0 | 0 0 |
| 1 | | | | | | | | | | | 1 | 0 | 0 | 0 0 |
| 0 | 1 | 1 | 1 | 0 | | 1 | 0 | 0 | 1 0 | | 1 | 0 | 0 | 0 | 0 0 |
| 1 | | | | | | | | | | | 1 | 0 | 0 | 0 0 |
| 0 | 1 | 1 | 1 | 1 | | 1 | 0 | 0 | 1 1 | | 1 | 0 | 0 | 0 | 0 0 |
| 1 | | | | | | | | | | | 1 | 0 | 0 | 0 0 |

# Fig. 5(c)

C--carry to $2^{-22}$

S---sticky bits

| real value | | value of adding 1 to $2^{-24}$ | | value after real rounding | | reround signal | correction signal |
|---|---|---|---|---|---|---|---|
| $2^0$ | $2^{-23}\ 2^{-24}\ 2^{-25}\ S$ | c | $2^{-23}\ 2^{-24}\ 2^{-25}\ S$ | c | $2^{-23}\ 2^{-24}$ | | |
| 0 | 0  0  0  0 | | 0  0  1   0 0 | | 0  0  0 | 0 | 0 1 |
| 1 | | | | | 0  0 | 0 | 0 0 |
| 0 | 0  0  0  1 | | 0  0  1   0 1 | | 0  0  1 | 0 | 0 0 |
| 1 | | | | | 0  1 | 0 | 0 1 |
| 0 | 0  0  1  0 | | 0  0  1   1 0 | | 0  0  1 | 0 | 0 0 |
| 1 | | | | | 0  1 | 0 | 0 1 |
| 0 | 0  0  1  1 | | 0  0  1   1 1 | | 0  0  1 | 0 | 0 0 |
| 1 | | | | | 0  1 | 0 | 0 1 |
| 0 | 0  1  0  0 | | 0  1  0   0 0 | | 0  0  1 | 0 | 1 0 |
| 1 | | | | | 0  1 | 0 | 0 0 |
| 0 | 0  1  0  1 | | 0  1  0   0 1 | | 0  1  0 | 0 | 0 0 |
| 1 | | | | | 0  1 | 0 | 0 0 |
| 0 | 0  1  1  0 | | 0  1  0   1 0 | | 0  1  0 | 0 | 0 0 |
| 1 | | | | | 0  1 | 0 | 0 0 |
| 0 | 0  1  1  1 | | 0  1  0   1 1 | | 0  1  0 | 0 | 0 0 |
| 1 | | | | | 0  1 | 0 | 0 0 |
| 0 | 1  0  0  0 | | 0  1  1   0 0 | | 0  1  0 | 0 | 0 1 |
| 1 | | | | | 0  1 | 0 | 0 0 |
| 0 | 1  0  0  1 | | 0  1  1   0 1 | | 0  1  1 | 0 | 0 0 |
| 1 | | | | | 1  0 | 1 | 0 0 |
| 0 | 1  0  1  0 | | 0  1  1   1 0 | | 0  1  1 | 0 | 0 0 |
| 1 | | | | | 1  0 | 1 | 0 0 |
| 0 | 1  0  1  1 | | 0  1  1   1 1 | | 0  1  1 | 0 | 0 0 |
| 1 | | | | | 1  0 | 1 | 0 0 |
| 0 | 1  1  0  0 | | 1  0  0   0 0 | | 0  1  1 | 1 | 1 1 |
| 1 | | | | | 1  0 | 0 | 0 0 |
| 0 | 1  1  0  1 | | 1  0  0   0 1 | | 1  0  0 | 0 | 0 0 |
| 1 | | | | | 1  0 | 0 | 0 0 |
| 0 | 1  1  1  0 | | 1  0  0   1 0 | | 1  0  0 | 0 | 0 0 |
| 1 | | | | | 1  0 | 0 | 0 0 |
| 0 | 1  1  1  1 | | 1  0  0   1 1 | | 1  0  0 | 0 | 0 0 |
| 1 | | | | | 1  0 | 0 | 0 0 |

# Fig. 5(d)

C---carry to $2^{-51}$
S---sticky bits

| real value | | value of adding 1 to $2^{-53}$ | | value after real rounding | | reround signal | correction signal |
|---|---|---|---|---|---|---|---|
| $2^0$ | $2^{-52}\,2^{-53}\,2^{-54}\,$S | C $\,2^{-52}\,2^{-53}\,2^{-54}\,$S | | C $\,2^{-52}\,2^{-53}$ | | | |
| 0 | 0 0 0 0 | 0 0 1 | 0 0 | 0 0 0 | | 0 | 0 1 |
| 1 | | | | 0 0 | | 0 | 0 0 |
| 0 | 0 0 0 1 | 0 0 1 | 0 1 | 0 0 1 | | 0 | 0 0 |
| 1 | | | | 0 1 | | 0 | 0 1 |
| 0 | 0 0 1 0 | 0 0 1 | 1 0 | 0 0 1 | | 0 | 0 0 |
| 1 | | | | 0 1 | | 0 | 0 1 |
| 0 | 0 0 1 1 | 0 0 1 | 1 1 | 0 0 1 | | 0 | 0 0 |
| 1 | | | | 0 1 | | 0 | 0 1 |
| 0 | 0 1 0 0 | 0 1 0 | 0 0 | 0 0 1 | | 0 | 1 0 |
| 1 | | | | 0 1 | | 0 | 0 0 |
| 0 | 0 1 0 1 | 0 1 0 | 0 1 | 0 1 0 | | 0 | 0 0 |
| 1 | | | | 0 1 | | 0 | 0 0 |
| 0 | 0 1 1 0 | 0 1 0 | 1 0 | 0 1 0 | | 0 | 0 0 |
| 1 | | | | 0 1 | | 0 | 0 0 |
| 0 | 0 1 1 1 | 0 1 0 | 1 1 | 0 1 0 | | 0 | 0 0 |
| 1 | | | | 0 1 | | 0 | 0 0 |
| 0 | 1 0 0 0 | 0 1 1 | 0 0 | 0 1 0 | | 0 | 0 1 |
| 1 | | | | 0 1 | | 0 | 0 0 |
| 0 | 1 0 0 1 | 0 1 1 | 0 1 | 0 1 1 | | 0 | 0 0 |
| 1 | | | | 1 0 | | 1 | 0 0 |
| 0 | 1 0 1 0 | 0 1 1 | 1 0 | 0 1 1 | | 0 | 0 0 |
| 1 | | | | 1 0 | | 1 | 0 0 |
| 0 | 1 0 1 1 | 0 1 1 | 1 1 | 0 1 1 | | 0 | 0 0 |
| 1 | | | | 1 0 | | 1 | 0 0 |
| 0 | 1 1 0 0 | 1 0 0 | 0 0 | 0 1 1 | | 1 | 1 1 |
| 1 | | | | 1 0 | | 0 | 0 0 |
| 0 | 1 1 0 1 | 1 0 0 | 0 1 | 1 0 0 | | 0 | 0 0 |
| 1 | | | | 1 0 | | 0 | 0 0 |
| 0 | 1 1 1 0 | 1 0 0 | 1 0 | 1 0 0 | | 0 | 0 0 |
| 1 | | | | 1 0 | | 0 | 0 0 |
| 0 | 1 1 1 1 | 1 0 0 | 1 1 | 1 0 0 | | 0 | 0 0 |
| 1 | | | | 1 0 | | 0 | 0 0 |

# Fig. 6(a)

C --- carry to $2^{-21}$

S --- sticky bits

| real value | | value of adding 1 to $2^{-24}$ | value after real rounding | reround signal | correction signal |
|---|---|---|---|---|---|
| $2^{1}$ | $2^{-22} 2^{-23} 2^{-24}$ S | c $2^{-22} 2^{-23} 2^{-24}$ S | c $2^{-22} 2^{-23}$ | | |
| 0 | 0 0 0 0 | 0 0 0   111 | 0 0 0 | 0 | 0 0 |
| 1 | | | 0 0 | 0 | 0 0 |
| 0 | 0 0 0 1 | 0 0 1   0 0 | 0 0 1 | 0 | 0 0 |
| 1 | | | 0 1 | 0 | 0 1 |
| 0 | 0 0 1 0 | 0 0 1   0 1 | 0 0 1 | 0 | 0 0 |
| 1 | | | 0 1 | 0 | 0 1 |
| 0 | 0 0 1 1 | 0 0 1   1 0 | 0 0 1 | 0 | 0 0 |
| 1 | | | 0 1 | 0 | 0 1 |
| 0 | 0 1 0 0 | 0 0 1   1 1 | 0 0 1 | 0 | 0 0 |
| 1 | | | 0 1 | 0 | 0 1 |
| 0 | 0 1 0 1 | 0 1 0   0 0 | 0 1 0 | 0 | 0 0 |
| 1 | | | 0 1 | 0 | 0 0 |
| 0 | 0 1 1 0 | 0 1 0   0 1 | 0 1 0 | 0 | 0 0 |
| 1 | | | 0 1 | 0 | 0 0 |
| 0 | 0 1 1 1 | 0 1 0   1 0 | 0 1 0 | 0 | 0 0 |
| 1 | | | 0 1 | 0 | 0 0 |
| 0 | 1 0 0 0 | 0 1 0   1 1 | 0 1 0 | 0 | 0 0 |
| 1 | | | 0 1 | 0 | 0 0 |
| 0 | 1 0 0 1 | 0 1 1   0 0 | 0 1 1 | 0 | 0 0 |
| 1 | | | 1 0 | 1 | 0 0 |
| 0 | 1 0 1 0 | 0 1 1   0 1 | 0 1 1 | 0 | 0 0 |
| 1 | | | 1 0 | 1 | 0 0 |
| 0 | 1 0 1 1 | 0 1 1   1 0 | 0 1 1 | 0 | 0 0 |
| 1 | | | 1 0 | 1 | 0 0 |
| 0 | 1 1 0 0 | 0 1 1   1 1 | 0 1 1 | 0 | 0 0 |
| 1 | | | 1 0 | 1 | 0 0 |
| 0 | 1 1 0 1 | 1 0 0   0 0 | 1 0 0 | 0 | 0 0 |
| 1 | | | 1 0 | 0 | 0 0 |
| 0 | 1 1 1 0 | 1 0 0   0 1 | 1 0 0 | 0 | 0 0 |
| 1 | | | 1 0 | 0 | 0 0 |
| 0 | 1 1 1 1 | 1 0 0   1 0 | 1 0 0 | 0 | 0 0 |
| 1 | | | 1 0 | 0 | 0 0 |

34

## Fig. 6(b)

C --- carry to $2^{-50}$
S --- sticky bits

| real value | | value of adding 1 to $2^{-53}$ | | value after real rounding | | reround signal | correction signal |
|---|---|---|---|---|---|---|---|
| $2^l$ | $2^{-51}\ 2^{-52}\ 2^{-53}\ S$ | $c\ 2^{-51}\ 2^{-52}\ 2^{-53}\ S$ | | $c\ 2^{-51}\ 2^{-52}$ | | signal | signal |
| 0 | 0 0 0 0 | 0 0 0 | 1 1 1 | 0 0 0· | | 0 | 0 0 |
| 1 | | | | 0 0 | | 0· | 0 0 |
| 0 | 0 0 0 1 | 0 0 1 | 0 0 | 0 0 1 | | 0 | 0 0 |
| 1 | | | | 0 1 | | 0 | 0 1 |
| 0 | 0 0 1 0 | 0 0 1 | 0 1 | 0 0 1 | | 0 | 0 0 |
| 1 | | | | 0 1 | | 0 | 0 1 |
| 0 | 0 0 1 1 | 0 0 1 | 1 0 | 0 0 1 | | 0 | 0 0 |
| 1 | | | | 0 1 | | 0 | 0 1 |
| 0 | 0 1 0 0 | 0 0 1 | 1 1 | 0 0 1 | | 0 | 0 0 |
| 1 | | | | 0 1 | | 0 | 0 1 |
| 0 | 0 1 0 1 | 0 1 0 | 0 0 | 0 1 0 | | 0 | 0 0 |
| 1 | | | | 0 1 | | 0 | 0 0 |
| 0 | 0 1 1 0 | 0 1 0 | 0 1 | 0 1 0 | | 0 | 0 0 |
| 1 | | | | 0 1 | | 0 | 0 0 |
| 0 | 0 1 1 1 | 0 1 0 | 1 0 | 0 1 0 | | 0 | 0 0 |
| 1 | | | | 0 1 | | 0 | 0 0 |
| 0 | 1 0 0 0 | 0 1 0 | 1 1 1 | 0 1 0 | | 0 | 0 0 |
| 1 | | | | 0 1 | | 0 | 0 0 |
| 0 | 1 0 0 1 | 0 1 1 | 0 0 | 0 1 1 | | 0 | 0 0 |
| 1 | | | | 1 0 | | 1 | 0 0 |
| 0 | 1 0 1 0 | 0 1 1 | 0 1 | 0 1 1 | | 0 | 0 0 |
| 1 | | | | 1 0 | | 1 | 0 0 |
| 0 | 1 0 1 1 | 0 1 1 | 1 0 | 0 1 1 | | 0 | 0 0 |
| 1 | | | | 1 0 | | 1 | 0 0 |
| 0 | 1 1 0 0 | 0 1 1 | 1 1 | 0 1 1 | | 0 | 0 0 |
| 1 | | | | 1 0 | | 1 | 0 0 |
| 0 | 1 1 0 1 | 1 0 0 | 0 0 | 1 0 0 | | 0 | 0 0 |
| 1 | | | | 1 0 | | 0 | 0 0 |
| 0 | 1 1 1 0 | 1 0 0 | 0 1 | 1 0 0 | | 0 | 0 0 |
| 1 | | | | 1 0 | | 0 | 0 0 |
| 0 | 1 1 1 1 | 1 0 0 | 1 0 | 1 0 0 | | 0 | 0 0 |
| 1 | | | | 1 0 | | 0 | 0 0 |

# Fig. 6(c)

C --- carry to $2^{-22}$
S --- sticky bits

| real value | | value of adding 1 to $2^{-25}$ | value after real rounding | reround signal | correction signal |
|---|---|---|---|---|---|
| $2^0$ | $2^{-23}$ $2^{-24}$ $2^{-25}$ S | C $2^{-23}$ $2^{-24}$ $2^{-25}$ S | C $2^{-23}$ $2^{-24}$ | | |
| 0 | .0 0 0 0 | 0 0 0 ¦ 1 1 1 | 0 0 0.. | 0 | 0 0 |
| 1 | | | 0 0 | 0 | 0 0 |
| 0 | ·0 0 0 1 | 0 0 1 0¦0 | 0 0 1 | 0 | 0 0 |
| 1 | | | 0 1 | 0 | 0 1 |
| 0 | 0 0 1 0 | 0 0 1 0¦1 | 0 0 1 | 0 | 0 0 |
| 1 | | | 0 1 | 0 | 0 1 |
| 0 | 0 0 1 1 | 0 0 1 ¦ 1 0 | 0 0 1 | 0 | 0 0 |
| 1 | | | 0 1 | 0 | 0 1 |
| 0 | 0 1 0 0 | 0 0 1 ¦ 1 1 | 0 0 1 | 0 | 0 0 |
| 1 | | | 0 1 | 0 | 0 1 |
| 0 | 0 1 0 1 | 0 1 0 0¦0 | 0 1 0 | 0 | 0 0 |
| 1 | | | 0 1 | 0 | 0 0 |
| 0 | 0 1 1 0 | 0 1 0 0¦1 | 0 1 0 | 0 | 0 0 |
| 1 | | | 0 1 | 0 | 0 0 |
| 0 | 0 1 1 1 | 0 1 0 ¦ 1 0 | 0 1 0 | 0 | 0 0 |
| 1 | | | 0 1 | 0 | 0 0 |
| 0 | 1 0 0 0 | 0 1 0 ¦ 1 1 1 | 0 1 0 | 0 | 0 0 |
| 1 | | | 0 1 | 0 | 0 0 |
| 0 | 1 0 0 1 | 0 1 1 0¦0 | 0 1 1 | 0 | 0 0 |
| 1 | | | 1 0 | 1 | 0 0 |
| 0 | 1 0 1 0 | 0 1 1 0¦1 | 0 1 1 | 0 | 0 0 |
| 1 | | | 1 0 | 1 | 0 0 |
| 0 | 1 0 1 1 | 0 1 1 ¦ 1 0 | 0 1 1 | 0 | 0 0 |
| 1 | | | 1 0 | 1 | 0 0 |
| 0 | 1 1 0 0 | 0 1 1 ¦ 1 1 | 0 1 1 | 0 | 0 0 |
| 1 | | | 1 0 | 1 | 0 0 |
| 0 | 1 1 0 1 | 1 0 0 0¦0 | 1 0 0 | 0 | 0 0 |
| 1 | | | 1 0 | 0 | 0 0 |
| 0 | 1 1 1 0 | 1 0 0 0¦1 | 1 0 0 | 0 | 0 0 |
| 1 | | | 1 0 | 0 | 0 0 |
| 0 | 1 1 1 1 | 1 0 0 ¦ 1 0 | 1 0 0 | 0 | 0 0 |
| 1 | | | 1 0 | 0 | 0 0 |

36

## Fig. 6(d)

C --- carry to $2^{-51}$
S --- sticky bits

| real value | | value of adding 1 to $2^{-54}$ | | value after real rounding | | reround signal | correction signal |
|---|---|---|---|---|---|---|---|
| $2^0$ | $2^{-52}\,2^{-53}\,2^{-54}\,$S | C | $2^{-52}\,2^{-53}\,2^{-54}\,$S | C | $2^{-53}\,2^{-54}$ | signal | signal |
| 0 | 0 0 0 0 | | 0 0 0 \|11 | | 0 0 0.. | 0 | 0 0 |
| 1 | | | | | 0 0 | 0 | 0 0 |
| 0 | 0 0 0 1 | | 0 0 1 0\|0 | | 0 0 1 | 0 | 0 0 |
| 1 | | | | | 0 1 | 0 | 0 1 |
| 0 | 0 0 1 0 | | 0 0 1 0\|1 | | 0 0 1 | 0 | 0 0 |
| 1 | | | | | 0 1 | 0 | 0 1 |
| 0 | 0 0 1 1 | | 0 0 1 \|10 | | 0 0 1 | 0 | 0 0 |
| 1 | | | | | 0 1 | 0 | 0 1 |
| 0 | 0 1 0 0 | | 0 0 1 1\|1 | | 0 0 1 | 0 | 0 0 |
| 1 | | | | | 0 1 | 0 | 0 1 |
| 0 | 0 1 0 1 | | 0 1 0 0\|0 | | 0 1 0 | 0 | 0 0 |
| 1 | | | | | 0 1 | 0 | 0 0 |
| 0 | 0 1 1 0 | | 0 1 0 0\|1 | | 0 1 0 | 0 | 0 0 |
| 1 | | | | | 0 1 | 0 | 0 0 |
| 0 | 0 1 1 1 | | 0 1 0 \|10 | | 0 1 0 | 0 | 0 0 |
| 1 | | | | | 0 1 | 0 | 0 0 |
| 0 | 1 0 0 0 | | 0 1 0 \|11 | | 0 1 0 | 0 | 0 0 |
| 1 | | | | | 0 1 | 0 | 0 0 |
| 0 | 1 0 0 1 | | 0 1 1 0\|0 | | 0 1 1 | 0 | 0 0 |
| 1 | | | | | 1 0 | 1 | 0 0 |
| 0 | 1 0 1 0 | | 0 1 1 0\|1 | | 0 1 1 | 0 | 0 0 |
| 1 | | | | | 1 0 | 1 | 0 0 |
| 0 | 1 0 1 1 | | 0 1 1 1\|0 | | 0 1 1 | 0 | 0 0 |
| 1 | | | | | 1 0 | 1 | 0 0 |
| 0 | 1 1 0 0 | | 0 1 1 1\|1 | | 0 1 1 | 0 | 0 0 |
| 1 | | | | | 1 0 | 1 | 0 0 |
| 0 | 1 1 0 1 | | 1 0 0 0\|0 | | 1 0 0 | 0 | 0 0 |
| 1 | | | | | 1 0 | 0 | 0 0 |
| 0 | 1 1 1 0 | | 1 0 0 0\|1 | | 1 0 0 | 0 | 0 0 |
| 1 | | | | | 1 0 | 0 | 0 0 |
| 0 | 1 1 1 1 | | 1 0 0 \|10 | | 1 0 0 | 0 | 0 0 |
| 1 | | | | | 1 0 | 0 | 0 0 |

37

## Fig. 7(a)

| input $2^{-24}\ 2^{-25}$ s | complete of 2 to input $2^{-24}\ 2^{-25}$ s | complete of 1 to input $2^{-24}\ 2^{-25}$ s | RN, RP(+),RM(-) Cin | RP(-), RM(+),RZ Cin |
|---|---|---|---|---|
| 0 0 0 | 0 0 0 | 1 1 1 | 1 | 0 |
| 0 0 1 | 1 1 1 | 1 1 0 | 1 | 0 |
| 0 1 0 | 1 1 0 | 1 0 1 | 1 | 0 |
| 0 1 1 | 1 0 1 | 1 0 0 | 1 | 0 |
| 1 0 0 | 1 0 0 | 0 1 1 | 1 | 0 |
| 1 0 1 | 0 1 1 | 0 1 0 | 1 | 0 |
| 1 1 0 | 0 1 0 | 0 0 1 | 1 | 0 |
| 1 1 1 | 0 0 1 | 0 0 0 | 1 | 0 |

## Fig. 7(b)

| input $2^{-53}\ 2^{-54}$ s | complete of 2 to input $2^{-53}\ 2^{-54}$ s | complete of 1 to input $2^{-53}\ 2^{-54}$ s | RN, RP(+),RM(-) Cin | RP(-), RM(+),RZ Cin |
|---|---|---|---|---|
| 0 0 0 | 0 0 0 | 1 1 1 | 1 | 0 |
| 0 0 1 | 1 1 1 | 1 1 0 | 1 | 0 |
| 0 1 0 | 1 1 0 | 1 0 1 | 1 | 0 |
| 0 1 1 | 1 0 1 | 1 0 0 | 1 | 0 |
| 1 0 0 | 1 0 0 | 0 1 1 | 1 | 0 |
| 1 0 1 | 0 1 1 | 0 1 0 | 1 | 0 |
| 1 1 0 | 0 1 0 | 0 0 1 | 1 | 0 |
| 1 1 1 | 0 0 1 | 0 0 0 | 1 | 0 |

## Fig. 7(c)

| input<br>$2^{-24}$ $2^{-25}$ s | complete of<br>2 to input<br>$2^{-24}$ $2^{-25}$ s | complete of<br>1 to input<br>$2^{-24}$ $2^{-25}$ s | RN,<br>RP(+),RM(-)<br>Cin | RP(-),<br>RM(+),RZ<br>Cin |
|---|---|---|---|---|
| 0 0 0 | 0 0 0 | 1 1 1 | 1 | 1 |
| 0 0 1 | 1 1 1 | 1 1 0 | 1 | 0 |
| 0 1 0 | 1 1 0 | 1 0 1 | 1 | 0 |
| 0 1 1 | 1 0 1 | 1 0 0 | 0 | 0 |
| 1 0 0 | 1 0 0 | 0 1 1 | 1 | 1 |
| 1 0 1 | 0 1 1 | 0 1 0 | 1 | 0 |
| 1 1 0 | 0 1 0 | 0 0 1 | 1 | 0 |
| 1 1 1 | 0 0 1 | 0 0 0 | 0 | 0 |

## Fig. 7(d)

| input<br>$2^{-53}$ $2^{-54}$ s | complete of<br>2 to input<br>$2^{-53}$ $2^{-54}$ s | complete of<br>1 to input<br>$2^{-53}$ $2^{-54}$ s | RN,<br>RP(+),RM(-)<br>Cin | RP(-),<br>RM(+),RZ<br>Cin |
|---|---|---|---|---|
| 0 0 0 | 0 0 0 | 1 1 1 | 1 | 1 |
| 0 0 1 | 1 1 1 | 1 1 0 | 1 | 0 |
| 0 1 0 | 1 1 0 | 1 0 1 | 1 | 0 |
| 0 1 1 | 1 0 1 | 1 0 0 | 0 | 0 |
| 1 0 0 | 1 0 0 | 0 1 1 | 1 | 1 |
| 1 0 1 | 0 1 1 | 0 1 0 | 1 | 0 |
| 1 1 0 | 0 1 0 | 0 0 1 | 1 | 0 |
| 1 1 1 | 0 0 1 | 0 0 0 | 0 | 0 |

Fig. 8

(a)

alignment

addition and substraction

normalize

round 1 bit shift

end

(b)

alignment

addition and substraction round, 1 bit shift

end    re-round    normalize

end

EP 0 973 089 B1

## Fig. 9(a)

$n$ --- no addition
$*$ --- don't care

| re-round | round mode | code of operation result | real operation | round addition bits | |
|---|---|---|---|---|---|
| | | | | expnt. diff. 0/1 | exc. for expnt. diff. 0/1 |
| 0 | RN | $*$ | add / substract | $2^{-24}$ / $n$ | $2^{-24}$ / $2^{-25}$ |
| | RP | $+$ | add / substract | $2^{-24}$ / $n$ | $2^{-24}$ / $2^{-25}$ |
| | | $-$ | $*$ | $n$ | $n$ |
| | RM | $+$ | $*$ | $n$ | $n$ |
| | | $-$ | add / substract | $2^{-24}$ / $n$ | $2^{-24}$ / $2^{-25}$ |
| | RZ | $*$ | $*$ | $n$ | $n$ |
| 1 | $*$ | $*$ | add | $2^{-24}$ | $2^{-24}$ |

## Fig. 9(b)

$n$ --- no addition
$*$ --- don't care

| re-round | round mode | code of operation result | real operation | round addition bits | |
|---|---|---|---|---|---|
| | | | | expnt. diff. 0/1 | exc. for expnt. diff. 0/1 |
| 0 | RN | $*$ | add / substract | $2^{-53}$ / $n$ | $2^{-53}$ / $2^{-54}$ |
| | RP | $+$ | add / substract | $2^{-53}$ / $n$ | $2^{-53}$ / $2^{-54}$ |
| | | $-$ | $*$ | $n$ | $n$ |
| | RM | $+$ | $*$ | $n$ | $n$ |
| | | $-$ | add / substract | $2^{-53}$ / $n$ | $2^{-53}$ / $2^{-54}$ |
| | RZ | $*$ | $*$ | $n$ | $n$ |
| 1 | $*$ | $*$ | add | $2^{-53}$ | $2^{-53}$ |

*Fig. 10*

| order | exponential size | data 1 code | data 2. code | real operation | code of operation result | remarks |
|---|---|---|---|---|---|---|
| addition | $e_1 = e_2$ | + | + | add | + | $f_1 + f_2$ |
| | | + | − | substract | (*1) | $f_1 - f_2$ |
| | | − | + | substract | (*1) | $f_2 - f_1$ |
| | | − | − | add | − | $-(f_1 + f_2)$ |
| | $e_1 < e_2$ | + | + | add | + | $f'_1 + f_2$ |
| | | + | − | substract | − | $-(f_2 - f'_1)$ |
| | | − | + | substract | + | $f_2 - f'_1$ |
| | | − | − | add | − | $-(f'_1 + f_2)$ |
| | $e_1 > e_2$ | + | + | add | + | $f_1 + f'_2$ |
| | | + | − | substract | + | $f_1 - f'_2$ |
| | | − | + | substract | − | $-(f_1 - f'_2)$ |
| | | − | − | add | − | $-(f_1 + f_2)$ |
| substraction | $e_1 = e_2$ | + | + | substract | (*1) | $f_2 - f_1$ |
| | | + | − | add | − | $-(f_2 + f_1)$ |
| | | − | + | add | + | $f_2 + f_1$ |
| | | − | − | substract | (*1) | $-(f_2 - f_1)$ |
| | $e_1 < e_2$ | + | + | substract | + | $f_2 - f'_1$ |
| | | + | − | add | − | $-(f_2 + f'_1)$ |
| | | − | + | add | + | $f_2 + f'_1$ |
| | | − | − | substract | − | $-(f_2 - f'_1)$ |
| | $e_1 > e_2$ | + | + | substract | − | $-(f_1 - f'_2)$ |
| | | + | − | add | − | $-(f_1 + f'_2)$ |
| | | − | + | add | + | $f_1 + f'_2$ |
| | | − | − | substract | + | $f_1 - f'_2$ |

$f_1$ : mantissa of data 1
$f_2$ : mantissa of data 2
$e_1$ : exponential of data 1
$e_2$ : exponential of data 2
$f_1'$ : data aligned $f_1$
$f_2'$ : data aligned $f_2$

(*) code of result after effective operation

## Fig. 11

| L R S | code of operation result | round addition signal | | | |
|---|---|---|---|---|---|
| | | RM | RP | RN | RZ |
| 0 0 0 | + | 0 | 0 | 0 | 0 |
| | − | | | | |
| 0 0 1 | + | 0 | 1 | 0 | 0 |
| | − | 1 | 0 | | |
| 0 1 0 | + | 0 | 1 | 0 | 0 |
| | − | 1 | 0 | | |
| 0 1 1 | + | 0 | 1 | 1 | 0 |
| | − | 1 | 0 | | |
| 1 0 0 | + | 0 | 0 | 0 | 0 |
| | − | | | | |
| 1 0 1 | + | 0 | 1 | 0 | 0 |
| | − | 1 | 0 | | |
| 1 1 0 | + | 0 | 1 | 1 | 0 |
| | − | 1 | 0 | | |
| 1 1 1 | + | 0 | 1 | 1 | 0 |
| | − | 1 | 0 | | |

## Fig. 12

(a)
```
  L R
  1 1
+)  1
 ‾‾‾‾
  0 0
carry 1
```

(b)
```
  L R
  0 1
+)  1
 ‾‾‾‾
  1 0
carry 0
```

(c)
```
  R S
  0 0
+) 1 1
 ‾‾‾‾
  1 1
carry 0
```

(d)
```
  R S
  0 1
+) 1 1
 ‾‾‾‾
  0 0
carry 1
```

(e)
```
  R S
  1 0
+) 1 1
 ‾‾‾‾
  0 1
carry 1
```

(f)
```
  R S
  1 1
+) 1 1
 ‾‾‾‾
  1 0
carry 1
```

Fig. 13(a)

$$\begin{cases} L = D_1 \\ R = G' \\ S = R' + S' \end{cases} — (1)$$

$$\begin{cases} L = D_2 \\ R = D_1 \\ S = G' + R' + S' \end{cases} — (2)$$

Fig. 13(b)

$$\begin{cases} L = G'' \\ R = R'' \\ S = S'' \end{cases} — (3)$$

$$\begin{cases} L = D_1 \\ R = G'' \\ S = R'' + S'' \end{cases} — (4)$$

wherein $\ G''R''S'' = \overline{G'R'S'} + 1$

*Fig.* **14**